(19) Europäisches Patentamt
European Patent Office
Office européen des brevets

(11) **EP 2 195 558 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(51) Int Cl.:
***F16H 61/12*** *(2010.01)*     ***F16H 61/32*** *(2006.01)*
***F16H 59/68*** *(2006.01)*

(21) Anmeldenummer: **08804953.1**

(22) Anmeldetag: **01.10.2008**

(86) Internationale Anmeldenummer:
**PCT/EP2008/063129**

(87) Internationale Veröffentlichungsnummer:
**WO 2009/050036 (23.04.2009 Gazette 2009/17)**

(54) **VERFAHREN ZUR NOTSTEUERUNG EINES AUTOMATISIERTEN SCHALTGETRIEBES**

METHOD FOR THE EMERGENCY CONTROL OF AN AUTOMATIC TRANSMISSION

PROCEDE DE COMMANDE D'URGENCE D'UNE TRANSMISSION AUTOMATIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.10.2007   DE 102007049142**

(43) Veröffentlichungstag der Anmeldung:
**16.06.2010 Patentblatt 2010/24**

(73) Patentinhaber: **ZF Friedrichshafen AG**
**88038 Friedrichshafen (DE)**

(72) Erfinder: **FROMBACH, Freddy Josef**
**88097 Eriskirch (DE)**

(56) Entgegenhaltungen:
**WO-A-2006/053512     DE-A1- 10 027 332**
**DE-A1- 10 143 325     DE-A1-102006 044 538**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Notsteuerung eines automatisierten Schaltgetriebes, bei dem Wähl- und Schaltvorgänge über eine um ihre Längsachse drehbar und axial verschiebbar gelagerte Schaltwelle einleitbar sind, die über einen Wähltrieb mit einem als Gleichstrom-Elektromotor ausgebildeten Wählsteller in einer Wählbewegungsrichtung und über einen Schalttrieb mit einem als Gleichstrom-Elektromotor ausgebildeten Schaltsteller in einer Schaltbewegungsrichtung verstellbar ist, und deren aktuelle Wähl- und Schaltpositionen im Normalbetrieb mittels einer mit dem Wähltrieb in Wirkverbindung stehenden Wählsensoreinrichtung und mittels einer mit dem Schalttrieb in Wirkverbindung stehenden Schaltsensoreinrichtung ermittelbar sind, wobei bei einem Ausfall einer der Sensoreinrichtungen eine Stellwegposition des betreffenden Stelltriebs ersatzweise durch eine Auswertung mindestens eines elektrischen Kennwertes eines der Elektromotoren ermittelt wird. Dieses Verfahren wird in zwei voneinander unabhängigen Varianten beschrieben, die den Ansprüchen 1 und 17 entnehmbar sind.

Ein Schaltgetriebe eines Kraftfahrzeugs weist üblicherweise mindestens zwei achsparallele Getriebewellen auf, die selektiv über mehrere Gangradsätze mit unterschiedlicher Übersetzung miteinander in Triebverbindung bringbar sind. Die Gangradsätze umfassen jeweils mindestens ein auf einer der beiden Getriebewellen drehfest angeordnetes Festrad und ein auf der anderen der beiden Getriebewellen drehbar gelagertes Losrad. Das Losrad steht bevorzugt durch einen unmittelbaren Verzahnungseingriff mit dem Festrad in Triebverbindung und ist mittels einer zugeordneten Gangkupplung mit der zugeordneten Getriebewelle drehfest verbindbar.

Durch das Schließen einer Gangkupplung wird somit das Losrad des betreffenden Gangradsatzes mit der zugeordneten Getriebewelle drehfest verbunden und damit der betreffende Gang getriebeintern eingelegt. Durch das Öffnen der Gangkupplung wird die drehfeste Verbindung des Losrades mit der zugeordneten Getriebewelle wieder gelöst und damit der betreffende Gang getriebeintern ausgelegt. Üblicherweise sind die Gangkupplungen als sperrsynchronisierte oder unsynchronisierte Klauenkupplungen ausgebildet, die jeweils mittels einer drehfest und axial verschiebbar auf der betreffenden Getriebewelle angeordneten Schaltmuffe ein- und ausrückbar sind.

Zur Betätigung einer Schaltmuffe und somit zum getriebeinternen Ein- und Auslegen eines Gangs ist zumeist eine Schaltstange vorgesehen, die achsparallel neben der betreffenden Getriebewelle angeordnet ist, axial verschiebbar gelagert ist, sowie über eine starr befestigte und in eine äußere Ringnut der Schaltmuffe eingreifende Schaltgabel mit der Schaltmuffe in Wirkverbindung steht. Alternativ dazu kann für diesen Zweck jedoch auch eine Schaltschwinge vorgesehen sein, die um eine zu der betreffenden Getriebewelle tangential ausgerichtete Drehachse schwenkbar gelagert ist und mit einem gabelförmigen Teil in die äußere Ringnut der Schaltmuffe eingreift. Zur Begrenzung des Bauraumbedarfs der Getriebekomponenten sind die Losräder von zwei benachbarten Gangradsätzen jeweils bevorzugt auf derselben Getriebewelle angeordnet und die betreffenden zwei Gangkupplungen in einem Schaltpaket mit einer gemeinsamen Schaltmuffe zusammengefasst, so dass das Ein- und Auslegen der betreffenden zwei Gänge jeweils über eine Axialverschiebung einer einzigen Schaltstange oder über die Verschwenkung einer einzigen Schaltschwinge in jeweils entgegengesetzter Richtung erfolgt.

Die Betätigung der getriebeinternen Schaltelemente, wie Schaltstangen und Schaltschwingen, erfolgt zumeist mittels einer um ihre Längsachse drehbar und axial verschiebbar gelagerte Schaltwelle. Bei einem Wählvorgang wird durch eine Bewegung der Schaltwelle in einer Wählbewegungsrichtung selektiv ein formschlüssiger Eingriff eines einzigen wellenfesten Schaltfingers oder eines von mehreren wellenfesten Schaltfingern mit einem schaltelementfesten Mitnehmer und somit eine Stellverbindung der Schaltwelle mit dem betreffenden Schaltelement hergestellt. Bei einem Schaltvorgang wird das betreffende Schaltelement durch eine Bewegung der Schaltwelle in einer Schaltbewegungsrichtung derart verschoben oder verschwenkt, dass die Gangkupplung eines der maximal zwei dem gewählten Schaltelement zugeordneten Gänge ein- oder ausgerückt und somit der betreffende Gang ein- oder ausgelegt wird. Bei einer achsparallelen Anordnung der Schaltwelle zu den Getriebewellen entspricht ein Wählvorgang einer Drehung der Schaltwelle um ihre Längsachse und ein Schaltvorgang einer Axialverschiebung der Schaltwelle. Bei einer senkrechten Anordnung der Schaltwelle bezüglich der Getriebewellen ist dagegen ein Wählvorgang mit einer Axialverschiebung der Schaltwelle und ein Schaltvorgang mit einer Drehung der Schaltwelle um ihre Längsachse verbunden.

Bei manuell schaltbaren Schaltgetrieben steht die Schaltwelle über eine z.B. als Gestängevorrichtung oder als Seilzugvorrichtung ausgebildete Übertragungseinrichtung mit einem im Fahrzeuginnenraum angeordneten und von einem Fahrer betätigbaren Schalthebel in Verbindung. Bei einem üblichen H- oder mehrfach-H-Schaltschema ist der Schalthebel zur Auswahl einer von mehreren Schaltgassen innerhalb einer Wählgasse und zum Ein- und Auslegen der jeweils zugeordneten Gänge innerhalb jeder Schaltgasse verschwenkbar. Die über den Schalthebel manuell eingegebenen Wähl- und Schaltvorgänge werden somit entsprechend dem Schaltschema mechanisch auf die Schaltwelle und von dieser auf die getriebeinternen Schaltelemente übertragen.

Bei automatisiert schaltbaren Schaltgetrieben steht die Schaltwelle zur Einleitung von Wähl- und Schaltvorgängen dagegen über einen Wähltrieb mit einem steuerbaren Wählsteller und über einen Schalttrieb mit einem steuerbaren Schaltsteller in Stellverbindung. Die Wähl- und Schaltsteller eines automatisierten Schaltgetriebes können prinzipiell in beliebiger Weise ausgebildet sein, beispielsweise als hydraulische oder pneumatische Stellzylinder. Druckmittelbetätigte Getriebesteller erfordern jedoch nachteilig eine aufwendige Druckversorgungseinrichtung mit einer Pumpe, einem Druckspeicher, einem Druckbegrenzungsventil und einem Hauptdruckventil, sowie eine komplizierte Steuerungseinrichtung mit druckgesteuerten und/oder elektromagnetisch gesteuerten Druck- und Durchflussregelventilen. Daher werden insbesondere bei Kraftfahrzeugen, die nicht schon für andere Zwecke mit einer Druckversorgungseinrichtung versehen sind, bevorzugt Elektromotoren als Wähl- und Schaltsteller verwendet, die über das elektrische Bordnetz mit Energie versorgbar und unmittelbar elektrisch bzw. elektronisch steuerbar sind.

Zur Steuerung eines automatisierten Schaltgetriebes ist die Ermittlung des jeweils aktuellen Wähl- und Schaltzustands erforderlich, der durch die Wähl- und Schaltposition der Schaltwelle und durch die Stellpositionen des Wähltriebs und des Schalttriebs gegeben ist. Daher wird der aktuelle Wähl- und Schaltzustand eines automatisierten Schaltgetriebes üblicherweise mittels einer mit dem Wähltrieb in Wirkverbindung stehenden Wählsensoreinrichtung und mittels einer mit dem Schalttrieb in Wirkverbindung stehenden Schaltsensoreinrichtung ermittelt.

Typische Schaltbetätigungsvorrichtungen von automatisierten Schaltgetrieben, bei denen die Einleitung von Wähl- und Schaltvorgängen jeweils mittels einer Schaltwelle erfolgt, die durch jeweils einen Elektromotor über einen Wähltrieb in einer Wählbewegungsrichtung und über einen Schalttrieb in einer Schaltbewegungsrichtung verstellbar ist, sind in unterschiedlicher Ausbildung und Anordnung beispielsweise aus der EP 0 377 848 B1, der DE 199 04 022 A1 und der DE 101 43 325 A1 bekannt.

Bei der Schaltbetätigungsvorrichtung gemäß der EP 0 377 848 B1 umfasst eine im wesentlichen zweiteilig ausgebildete Schaltwelle eine um ihre Längsachse drehbar gelagerte Zentralwelle und eine auf dieser axial verschiebbar und drehbar gelagerte Schalthülse. Die Zentralwelle ist senkrecht zu mehreren achsparallel zu den Getriebewellen des Schaltgetriebes ausgerichteten Schaltstangen angeordnet. Die Schalthülse ist mit einem radial ausgerichteten Schaltfinger versehen und steht über wechselweise ineinander greifende Zähne und Ausnehmungen axialbeweglich und drehfest mit einer wellenfesten Hülse in Verbindung. Der Wähltrieb weist eine von einem als Elektromotor ausgebildeten Wählsteller antreibbare Spindelwelle auf, die achsparallel zu der Schaltwelle ausgerichtet ist und auf der eine mit der Schalthülse formschlüssig in Eingriff stehende Spindelmutter angeordnet ist. Der Schalttrieb weist eine von einem als Elektromotor ausgebildeten Schaltsteller antreibbare Spindelwelle auf, die normal zu der Zentralwelle ausgerichtet ist, und auf der eine mit einem Zapfen versehene Spindelmutter angeordnet ist. Der Zapfen steht formschlüssig mit dem gabelförmigen Ende eines Hebelarms in Verbindung, der starr mit einer achsparallel zu der Zentralwelle angeordneten, drehbar gelagerten Hilfswelle verbunden ist. Ein weiterer axial beabstandet von dem Hebelarm auf der Hilfswelle befestigter Hebel steht über ein gabelförmiges Ende formschlüssig mit dem äußeren Ende eines starr mit der Schalthülse verbundenen Stellhebels in Eingriff. Eine Betätigung des Wählstellers führt somit zu einer Axialverschiebung der Schalthülse entlang der Längsachse der Zentralwelle und damit zu einem selektiven Eingriff des Schaltfingers in den Mitnehmer einer der Schaltstangen. Eine Betätigung des Schaltstellers bewirkt eine Drehung der Schalthülse um die Längsachse der Zentralwelle und somit eine Axialverschiebung der mit dem Schaltfinger in Stellverbindung stehenden Schaltstange. Zur Erfassung des aktuellen Wählzustands des Schaltgetriebes ist ein mit der Spindelmutter des Wähltriebs in Verbindung stehendes Drehpotentiometer und zur Erfassung des Schaltzustands des Schaltgetriebes ein mit der Hilfswelle des Schalttriebs oder der Zentralwelle in Verbindung stehendes weiteres Drehpotentiometer vorgesehen.

Bei der aus der DE 199 04 022 A1 bekannten Schaltbetätigungsvorrichtung ist eine mit einem radial ausgerichteten Schaltfinger versehene Schaltwelle um ihre Längsachse drehbar und axial verschiebbar gelagert und senkrecht zu mehreren Schaltstangen angeordnet. Der Wähltrieb weist eine von einem als Elektromotor ausgebildeten Wählsteller antreibbare Schneckenwelle auf, die senkrecht zu der Schaltwelle und den Schaltstangen ausgerichtet ist, und die mit einem Schneckenrad in Eingriff steht, das starr mit einer tangential zu der Schaltwelle ausgerichteten Steckachse verbunden ist. Ein axial beabstandet von dem Schneckenrad auf der Steckachse angeordnetes Ritzel steht mit einem Zahnstangensegment in Verzahnungseingriff, das Bestandteil einer axial abgestützt und drehbar auf der Schaltwelle gelagerten Hülse ist. Der Schalttrieb weist eine von einem als Elektromotor ausgebildeten Schaltsteller antreibbare Schneckenwelle auf, die achsparallel zu der Schneckenwelle des Wähltriebs ausgerichtet ist, und die mit einem Schneckenrad in Eingriff steht, das über ein elastisches Element mit einer achsparallel zu der Schaltwelle ausgerichteten Steckachse verbunden ist. Ein axial beabstandet von dem Schneckenrad auf der Steckachse angeordnetes Ritzel steht mit einem Segmentzahnrad in Verzahnungseingriff, das mit umfangsseitiger Ausrichtung starr mit der Schaltwelle verbunden ist. Eine Betätigung des Wählstellers führt somit zu einer Axialverschiebung der Schaltwelle und damit zu einem selektiven Eingriff des Schaltfingers in den Mitnehmer einer der Schaltstangen. Eine Betätigung des Schaltstellers bewirkt eine Drehung der Schaltwelle um ihre Längsachse und somit eine Axialverschiebung der mit dem Schaltfinger in Stellverbindung stehenden Schaltstange.

Bei der Schaltbetätigungsvorrichtung gemäß der DE 101 43 325 A1 sind der durch einen als Elektromotor ausgebildeten Wählsteller antreibbare Wähltrieb und der durch einen als Elektromotor ausgebildeten Schaltsteller antreibbare Schalttrieb in einem Stellmodul zusammengefasst. Der Wähltrieb weist eine von dem Wählsteller antreibbare Spindelwelle auf, die achsparallel zu einer normal zu mehreren Schaltstangen angeordneten Schaltwelle ausgerichtet ist. Auf der Spindelwelle des Wähltriebs ist eine Spindelmutter angeordnet, die mit einem zum Eingriff in einen axial wirksamen Wählmitnehmer der Schaltwelle vorgesehenen Wählfinger versehen ist.

Der Schalttrieb weist eine von dem Schaltsteller antreibbare Spindelwelle auf, die achsparallel zu der Spindelwelle des Wähltriebs ausgerichtet ist. Auf der Spindelwelle des Schalttriebs ist ebenfalls eine Spindelmutter angeordnet, die über elastische Elemente mit einem koaxial angeordneten und axial verschiebbaren Schaltzylinder in Verbindung steht. Der Schaltzylinder steht mit einem um eine tangentiale Achse drehbaren Umlenkhebel in Verbindung, der mit einem zum Eingriff in einen umfangsseitig wirksamen Schaltmitnehmer der Schaltwelle vorgesehenen Schaltfinger versehen ist. Eine Betätigung des Wählstellers führt somit zu einer Axialverschiebung der Schaltwelle und damit zu einem selektiven Eingriff eines Schaltfingers der Schaltwelle in den Mitnehmer einer der Schaltstangen. Eine Betätigung des Schaltstellers bewirkt eine Drehung des Umlenkhebels und somit über eine Drehung der Schaltwelle eine Axialverschiebung der mit dem Schaltfinger der Schaltwelle in Stellverbindung stehenden Schaltstange.

Zur Erfassung des aktuellen Wählzustands des Schaltgetriebes sind ein mit dem Wählsteller in Verbindung stehender Inkrementalweggeber und ein von einem an der Spindelmutter des Wähltriebs angeordneten Magneten betätigbarer Positionssensor vorgesehen. Zur Erfassung des Schaltzustands des Schaltgetriebes sind ein mit dem Schaltsteller in Verbindung stehender Inkrementalweggeber und ein von einem an dem Schaltzylinder angeordneten Magneten betätigbarer Positionssensor vorgesehen.

Fällt eine der Sensoreinrichtungen aus, was aufgrund unterschiedlicher Defekte möglich und anhand von unplausiblen oder außerhalb von festgelegten Grenzwerten liegenden Sensorsignalen erkennbar ist, kann das Schaltgetriebe entweder in einen ohne die defekte Sensoreinrichtung einstellbaren sicheren Zustand gesteuert oder in einem Notbetrieb unter Nutzung von ersatzweise ermittelten Positionssignalen weiter betrieben werden.

Hierzu ist aus der DE 100 34 736 A1 ein Verfahren zur Notsteuerung eines automatisierten Schaltgetriebes bekannt, gemäß dem bei einem Ausfall der Wählsensoreinrichtung ein Notbetriebsmodus aktiviert wird, der während der Fahrt nur das Einlegen von Gängen ermöglicht, die in Schaltrichtung entgegengesetzt zu dem Rückwärtsgang einlegbar sind. Hierdurch wird das versehentliche Einlegen des Rückwärtsgangs während der Fahrt verhindert. Bei weitgehend stehendem Fahrzeug ist auch das Einlegen der in Schaltrichtung des Rückwärtsgangs einlegbaren Gänge, insbesondere auch des Rückwärtsgangs möglich. Aufgrund der geringen Anzahl der im Fahrbetrieb verfügbaren Gänge und der damit bei Schaltvorgängen auftretenden großen Übersetzungssprünge ist dieses bekannte Verfahren jedoch nur für eine kurzzeitige Weiterfahrt nach dem Auftreten eines entsprechenden Sensorausfalls, z.B. bis zum Erreichen eines Parkplatzes oder bis zu einer Servicewerkstatt geeignet.

Dagegen ist aus der DE 100 27 332 A1die auch die Merkmale des Oberbegriffs des Ansprüche 1 und 17 beinhaltet, ein Verfahren zur Notsteuerung eines automatisierten Schaltgetriebes bekannt, das bei einem Ausfall der Wähl- oder Schaltsensoreinrichtung eine längere Weiterfahrt ermöglicht. Bei diesem bekannten Verfahren ist vorgesehen, dass bei Ausfall einer der Sensoreinrichtungen in einem Notbetriebsverfahren die betreffende Stellposition ersatzweise durch eine Auswertung mindestens eines elektrischen Kennwertes eines der Elektromotoren ermittelt wird. Bevorzugt wird im Störungsfall der zeitliche Verlauf der Stromaufnahme des als Elektromotor ausgebildeten Wählstellers oder des als Elektromotor ausgebildeten Schaltstellers oder beider Getriebesteller überwacht, und aus einem Anstieg oder einem Abfall deren Stromaufnahme auf eine bestimmte Stellposition des Wähltriebs oder des Schalttriebs geschlossen.

So ist unter anderem vorgesehen, dass das Erreichen eines Endanschlags des Wähltriebs anhand eines Anstiegs der Stromaufnahme des Wählstellers erkannt wird, dass beim Auslegen eines Gangs das Erreichen der Neutralposition des Schalttriebs bei belastetem Wählsteller anhand eines Abfalls der Stromaufnahme des Wählstellers festgestellt wird, und dass beim Einlegen eines Gangs durch den Schalttrieb das Erreichen der Synchronposition, in der die Synchronringe einer sperrsynchronisierten Gangkupplung zur Anlage kommen, anhand eines Anstiegs der Stromaufnahme des Schaltstellers erkannt werden.

Für eine entsprechende Ermittlung von Wählpositionen des Wähltriebs, die zwischen den beiden Endanschlägen liegen, sind entsprechend stark ausgebildete Rastierungen erforderlich. Zwar sind bei diesem bekannten Verfahren alle vorhandenen Gänge im Notbetrieb weiterhin verfügbar, die Ermittlung bestimmter Stellpositionen anhand des Zeitverlaufs der Stromaufnahme eines Getriebestellers ist jedoch mit einer gewissen Unsicherheit verbunden, da ein Anstieg der Stromaufnahme auch durch ein Verklemmen des betreffenden Stelltriebs und ein Abfall der Stromaufnahme durch das Lösen einer Verklemmung des Stelltriebs verursacht werden kann. Zudem besteht mit Ausnahme von Endanschlägen die Gefahr eines Übersteuerns des betreffenden Stelltriebs, da das Erreichen einer bestimmten Stellposition anhand der Stromaufnahme verspätet erfolgt. Demzufolge kann es bei derart gesteuerten Wähl- und Schaltvorgängen zu Fehlfunktionen und gegebenenfalls zu einer Beschädigung eines Stelltriebs und des Schaltgetriebes kommen.

Der vorliegenden Erfindung liegt daher die Aufgabe zugrunde, ein verbessertes Verfahren zur Notsteuerung eines automatisierten Schaltgetriebes der eingangs genannten Art anzugeben, das gegenüber dem zuletzt beschriebenen Verfahren eine höhere Betriebssicherheit aufweist.

Die Lösung dieser Aufgabe wird durch Verfahren mit den Merkmalen der beiden unabhängigen Ansprüche erreicht, während vorteilhafte Ausgestaltungen und Weiterbildungen den jeweils zugeordneten Unteransprüchen entnehmbar sind.

Die Erfindung geht gemäß dem Oberbegriff des Anspruchs 1 aus von einem Verfahren zur Notsteuerung eines automatisierten Schaltgetriebes, bei dem Wähl- und Schaltvorgänge über eine um ihre Längsachse drehbar und axial verschiebbar gelagerte Schaltwelle einleitbar sind, die über einen Wähltrieb mit einem als Gleichstrom-Elektromotor ausgebildeten Wählsteller in einer Wählbewegungsrichtung und über einen Schalttrieb mit einem als Gleichstrom-Elektromotor ausgebildeten Schaltsteller in einer Schaltbewegungsrichtung verstellbar ist, und deren aktuelle Wähl- und Schaltpositionen im Normalbetrieb mittels einer mit dem Wähltrieb in Wirkverbindung stehenden Wählsensoreinrichtung und mittels einer mit dem Schalttrieb in Wirkverbindung stehenden Schaltsensoreinrichtung ermittelbar sind, wobei bei einem Ausfall einer der Sensoreinrichtungen eine Stellwegposition des betreffenden Stelltriebs ersatzweise durch eine Auswertung mindestens eines elektrischen Kennwertes eines der Elektromotoren ermittelt wird. Außerdem ist bei diesem Verfahren vorgesehen, dass innerhalb eines Wähl- oder Schaltvorgangs der Getriebesteller des von dem Ausfall der Sensoreinrichtung betroffenen Stelltriebs bei einer Stellfunktion zum Anfahren einer Zielposition $x_{Ziel}$ von einer Startposition $x_{Start}$ aus mit den folgenden Schritten gesteuert wird:

A) Initialisierung einer Stellzeitmessung;
B) Verfahren des Stelltriebs in Richtung der Zielposition $x_{Ziel}$ ;
C) Vergleich der gemessenen Stellzeit $t_{Mess}$ mit einer vorab bestimmten Sollstellzeit $t_{Soll}$;
D) Weiteres Verfahren des Stelltriebs in Richtung der Zielposition $x_{Ziel}$ solange die gemessene Stellzeit $t_{Mess}$ kleiner als eine vorgegebene untere Toleranzschwelle ($t_{Soll}$ - $\Delta t$) der Sollstellzeit $t_{Soll}$ ist ($t_{Mess}$ < $t_{Soll}$ - $\Delta t$);
E) Abbremsen des Stelltriebs und Weiterführen des Wähl- oder Schaltvorgangs, wenn die gemessene Stellzeit $t_{Mess}$ größer oder gleich der unteren Toleranzschwelle ($t_{Soll}$ - $\Delta t$) der Sollstellzeit $t_{Soll}$ ist ($t_{Mess} \geq t_{Soll}$ - $\Delta t$).

Bei dem Verfahren gemäß der Erfindung wird also von einem automatisierten Schaltgetriebe ausgegangen, bei dem Wähl- und Schaltvorgänge über eine um ihre Längsachse drehbar und axial verschiebbar gelagerte Schaltwelle eingeleitet werden. Die Schaltwelle ist über einen Wähltrieb mit einem als Gleichstrom-Elektromotor ausgebildeten Wählsteller in einer Wählbewegungsrichtung und über einen Schalttrieb mit einem als Gleichstrom-Elektromotor ausgebildeten Schaltsteller in einer Schaltbewegungsrichtung verstellbar, wobei es, wie schon zuvor erläutert wurde, von der Anordnung der Schaltwelle in Bezug auf die Getriebewellen abhängt, ob ein Wählvorgang der Axialverschiebung der Schaltwelle und ein Schaltvorgang der Drehung der Schaltwelle entsprechen, oder ob ein Wählvorgang mit einer Drehung der Schaltwelle und ein Schaltvorgang mit einer Axialverschiebung der Schaltwelle verbunden ist.

Im Normalbetrieb werden die jeweils aktuellen Wähl- und Schaltpositionen der Schaltwelle über eine mit dem Wähltrieb in Wirkverbindung stehende Wählsensoreinrichtung und über eine mit dem Schalttrieb in Wirkverbindung stehende Schaltsensoreinrichtung ermittelt. Die Sensoreinrichtungen weisen zumeist jeweils einen mit dem zugeordneten Getriebesteller oder dem zugeordneten Stelltrieb in Wirkverbindung stehenden Wegsensor zur kontinuierlichen Erfassung einer Stellwegposition innerhalb eines Stellwegbereiches, wie einen Inkrementalweggeber oder ein Potentiometer, und mindestens einen an dem Stelltrieb angeordneten und für den Abgleich des Wegsensors erforderlichen Positionssensor zur Erfassung einer diskreten Stellwegposition, wie z.B. einen Hallgeber, auf. Bei Ausfall einer der Sensoreinrichtungen können die Stellwegpositionen des betreffenden Stelltriebs aufgrund der bekannten Eigenschaften der als Gleichstrom-Elektromotoren ausgebildeten Getriebesteller ersatzweise durch eine Auswertung mindestens eines elektrischen Kennwertes eines der Elektromotoren ermittelt werden.

Erfindungsgemäß ist hierzu vorgesehen, dass während eines Wählvorgangs oder eines Schaltvorgangs das Anfahren einer diesbezüglichen Zielposition $x_{Ziel}$ von einer Startposition $x_{Start}$ aus durch eine zeitabhängige Steuerung des Getriebestellers erfolgt, dessen zugeordnete Sensoreinrichtung von dem Ausfall betroffen ist. So wird in der Startposition $x_{Start}$ zunächst eine Stellzeitmessung initialisiert, also die entsprechende Zeitvariable auf Null gesetzt und die Zeitmessung begonnen, und unmittelbar danach der betreffende Stelltrieb mittels dem zugeordneten Getriebesteller in Richtung der Zielposition $x_{Ziel}$ verfahren. Dabei wird laufend in kurzen Zeitintervallen die gemessene Stellzeit $t_{Mess}$ mit einer vorab bestimmten Sollstellzeit $t_{Soll}$ verglichen. Solange die gemessene Stellzeit $t_{Mess}$ kleiner als eine vorgegebene untere Toleranzschwelle ($t_{Soll}$ - $\Delta t$) der Sollstellzeit $t_{Soll}$ ist ($t_{Mess}$ < $t_{Soll}$ - $\Delta t$), wird das Verstellen des Stelltriebs in Richtung der Zielposition $x_{Ziel}$ fortgesetzt. Wenn die gemessene Stellzeit $t_{Mess}$ größer oder gleich der unteren Toleranzschwelle ($t_{Soll}$ - $\Delta t$) der Sollstellzeit $t_{Soll}$ ist ($t_{Mess} \geq t_{Soll}$ - $\Delta t$), gilt die Zielposition $x_{Ziel}$ als erreicht. Danach wird der betreffende Stelltrieb durch eine geeignete Ansteuerung des zugeordneten Getriebestellers abgebremst und der aktuell ablaufende Wähl- oder Schaltvorgang fortgesetzt.

Bei genauer Ermittlung der Sollstellzeit $t_{Soll}$ der betreffenden Stellfunktion, bei der es sich um das Anfahren einer bestimmten Wählposition zur Wahl einer neuen Schaltgasse innerhalb eines Wählvorgangs und um das Anfahren der Neutralposition einer Schaltgasse zum Auslegen eines Gangs oder um das Anfahren einer Synchron- bzw. Schaltposition einer Schaltgasse zum Synchronisieren bzw. Einlegen eines Gangs innerhalb eines Schaltvorgangs handeln kann, wird die betreffende Zielposition $x_{Ziel}$ des betreffenden Stelltriebs ebenfalls mit hoher Genauigkeit erreicht. Somit ist ein längerer Weiterbetrieb des betreffenden Kraftfahrzeugs möglich, da weiterhin alle Gänge und alle Wähl- und Schaltfunktionen zur Verfügung stehen.

Zur Erhöhung der Genauigkeit bei einer derart gesteuerten Stellfunktion ist es vorteilhaft, wenn zu Beginn der Stellfunktion zusätzlich eine Stellwegberechnung initialisiert wird, und nachfolgend die aktuelle Stellwegposition s kontinuierlich aus mindestens einem erfassten elektrischen Kennwert des zugeordneten Getriebestellers berechnet wird. Die berechnete Stellwegposition s wird nach Ablauf der Sollstellzeit $t_{Soll}$ mit der Zielposition $x_{Ziel}$ verglichen. Wenn dabei festgestellt wird, dass die berechnete Stellwegposition s innerhalb einer vorgegebenen Toleranzbreite ($x_{Ziel} \pm \Delta x$) die Zielposition $x_{Ziel}$ nicht erreicht hat (s < $x_{Ziel}$ - $\Delta x$, s > $x_{Ziel}$ + $\Delta x$), wird von einem aufgetretenen Fehler ausgegangen. Zur Vermeidung einer Beschädigung des betreffenden Stelltriebs und weiterer Bauteile des Schaltgetriebes ist in diesem Fall die Anzeige und/oder Durchführung einer Fehlerfunktion vorgesehen.

Eine begonnene Messung der Stellzeit $t_{Mess}$ und/oder eine begonnene Berechnung der Stellwegposition s wird nach dem Erreichen der Zielposition $x_{Ziel}$ zweckmäßig dann fortgesetzt, wenn unmittelbar danach das Anfahren einer weiteren, in derselben Stellrichtung liegenden Zielposition $x_{Ziel2}$ vorgesehen ist. Dies bedeutet bei gleichzeitiger Zeitmessung und Stellwegberechnung, dass der betreffende Stelltrieb über den zugeordneten Getriebesteller solange weiter in Richtung der zweiten Zielposition $x_{Ziel2}$ verfahren wird, bis die gemessene Stellzeit $t_{Mess}$ größer oder gleich der unteren Toleranzschwelle ($t_{Soll2}$ - $\Delta t$) einer für die weitere Zielposition $x_{Ziel2}$ gültigen Sollstellzeit $t_{Soll2}$ ist ($t_{Mess} \geq t_{Soll2}$ - $\Delta t$). Danach wird die berechnete Stellwegposition s mit der Zielposition $x_{Ziel2}$ verglichen. Wenn dabei festgestellt wird, dass die berechnete Stellwegposition s innerhalb einer vorgegebenen Toleranzbreite ($x_{Ziel2} \pm \Delta x$) die Zielposition $x_{Ziel2}$ nicht erreicht hat (s < $x_{Ziel2}$ - $\Delta x$, s > $x_{Ziel2}$ + $\Delta x$), wird die für diesen Fall vorgesehene Fehlerfunktion ausgeführt.

Zur Bestimmung der Sollstellzeit $t_{Soll}$ werden erfindungsgemäß die folgenden Schritte durchgeführt:

J) Anfahren einer detektierbaren ersten Bezugsposition $x_{Ref1}$;

K) Initialisierung einer Stellwegberechnung (s = 0) und einer Stellzeitmessung ($t_{Mess}$ = 0);

L) Verfahren des Stelltriebs in Richtung einer zweiten detektierbaren Bezugsposition $X_{Ref2}$ und

M) gleichzeitige Berechnung der Stellwegposition s aus mindestens einem erfassten elektrischen Kennwert des zugeordneten Getriebestellers;

N) Vergleich der berechneten Stellwegposition s mit vorgegebenen Stellweggrenzwerten $x_{Gr/u}$, $x_{Gr/o}$ und Vergleich der gemessenen Stellzeit $t_{Mess}$ mit vorgegebenen Stellzeitgrenzwerten $t_{Gr/u}$, $t_{Gr/o}$, wenn das Erreichen der zweiten Bezugsposition $x_{Ref2}$ detektiert wird;

O) Abspeichern der gemessenen Stellzeit $t_{Mess}$ als Sollstellzeit $t_{Soll}$ ($t_{Soll} = t_{Mess}$) oder Berechnen der Sollstellzeit $t_{Soll}$ aus der gemessenen Stellzeit $t_{Mess}$ ($t_{Soll} = f(t_{Mess})$), wenn die berechnete Stellwegposition s innerhalb der Stellweggrenzwerte $x_{Gr/u}$, $x_{GR/o}$ ($xGr/u \leq s \leq x_{Gr/o}$) und die gemessene Stellzeit $t_{Mess}$ innerhalb der Stellzeitgrenzwerte $t_{Gr/u}$, $t_{Gr/o}$ liegt ($t_{Gr/u} \leq t_{Mmess} \leq t_{Gr/o}$);

P) Ausführen einer Störungsfunktion, wenn die berechnete Stellwegposition s außerhalb der Stellweggrenzwerte $x_{Gr/u}$, $x_{Gr/o}$ liegt, oder die gemessene Stellzeit $t_{Mess}$ außerhalb der Stellzeitgrenzwerte $t_{Gr/u}$, $t_{Gr/o}$ liegt.

Durch diese Verfahrensschritte wird eine relativ genaue Ermittlung der Sollstellzeit $t_{Soll}$ erreicht, die wiederum eine relativ exakte und weitgehend fehlerfreie Durchführung der betreffenden Stellfunktion ermöglicht. Tritt bei der Ermittlung der Sollstellzeit $t_{Soll}$ jedoch eine Störung auf, so können im Rahmen der Störungsfunktion verschiedene Maßnahmen getroffen werden, um dennoch eine weitere Durchführung der betreffenden Stellfunktion und damit einen weiteren Betrieb des Schaltgetriebes sowie eine Weiterfahrt des Kraftfahrzeugs zu ermöglichen.

Wenn der Verfahrweg des Stellantriebs zwischen den beiden Bezugspositionen $x_{Ref1}$, $x_{Ref2}$ identisch mit dem Stellweg der zugeordneten Stellfunktion zwischen der Startposition $x_{Start}$ und der Zielposition $x_{Ziel}$ ist, so kann die Sollzeit $t_{Soll}$ auf einfache Weise mit der gemessenen Stellzeit $t_{Mess}$ gleichgesetzt werden ($t_{Soll} = t_{Mess}$). Da dies aber eher eine Ausnahme darstellt, d.h. der Stellweg einer Stellfunktion im allgemeinen kleiner oder größer als der Verfahrweg bei der Ermittlung der Sollstellzeit $t_{Soll}$ ist, wird zumeist eine Berechnung der Sollstellzeit $t_{Soll}$ aus der gemessenen Stellzeit $t_{Mess}$ unter Nutzung der bekannten Geometrie des Schaltgetriebes, insbesondere des betreffenden Stelltriebs erforderlich.

Demzufolge erfolgt die Berechnung der Sollstellzeit $t_{Soll}$ zweckmäßig durch eine Interpolation oder eine Extrapolation der als Verfahrdauer zwischen der ersten Bezugsposition $x_{Ref1}$ und der zweiten Bezugsposition $x_{Ref2}$ gemessenen Stellzeit $t_{Mess}$ mit dem Verhältnis des bekannten Stellweges zwischen der Startposition $x_{Start}$ und der Zielposition $x_{Ziel}$ zu dem bekannten Stellweg zwischen der ersten Bezugsposition $x_{Ref1}$ und der zweiten Bezugsposition $x_{Ref2}$, also nach der Gleichung

$$t_{Soll} = t_{Mess} * |(x_{Ziel} - x_{Start}) / (x_{Ref2} - x_{Ref1})|.$$

Zur Erhöhung der Genauigkeit bei der Berechnung der Sollstellzeit $t_{Soll}$ wird zweckmäßig eine durch das Anfahren des betreffenden Getriebestellers bedingte Verzögerung durch eine Korrektur mit einer Anfahrzeit $\Delta t_{Anf}$ berücksichtigt, was z.B. durch eine Berechnung der Sollstellzeit $t_{Soll}$ mit der Gleichung

$$t_{Soll} = (t_{Mess} - \Delta t_{Anf}) * |(x_{Ziel} - x_{Start}) / (x_{Ref2} - x_{Ref1})| + \Delta t_{Anf}$$

erfolgen kann.

Zusätzlich kann hierzu auch ein durch das Nachlaufen oder Auslaufen des betreffenden Getriebestellers nach dem Abstellen des Elektromotors durch eine Korrektur mit einer Nachlaufzeit $\Delta t_{Nach}$ berücksichtigt werden, was beispielsweise durch eine Berechnung der Sollstellzeit $t_{Soll}$ mit der Gleichung

$$t_{Soll} = (t_{Mess} - \Delta t_{Anf} + \Delta t_{Nach}) * |(x_{Ziel} - x_{Start}) / (x_{Ref2} - x_{Ref1})| + \Delta t_{Anf} - \Delta t_{Nach}$$

erfolgen kann.

Die Ermittlung der Sollstellzeit $t_{Soll}$ erfolgt am besten unmittelbar vor der Durchführung der zugeordneten Stellfunktion, da dann die schädlichen Auswirkungen sich verändernder Betriebsbedingungen ausgeschlossen sind. Da die Ermittlung der Sollstellzeit $t_{Soll}$ in diesem Fall aber einen unabhängigen Steuerungsablauf darstellt, kann die zugeordnete Stellfunktion dadurch etwas verzögert werden.

Falls eine Ermittlung unmittelbar vor der zugeordneten Stellfunktion jedoch nicht möglich ist, kann eine ausreichende genaue Feststellung der Sollstellzeit $t_{Soll}$ zumeist auch durch eine Ermittlung der Sollstellzeit $t_{Soll}$ während der vorhergehenden Durchführung derselben Stellfunktion erreicht werden. Da die Ermittlung der Sollstellzeit $t_{Soll}$ in diesem Fall keinen unabhängigen Steuerungsablauf bildet, wird der Steuerungsablauf des gerade ablaufenden Wähl- oder Schaltvorgangs dadurch auch nicht verzögert.

Als Bezugsposition $x_{Ref1}$, $x_{Ref2}$ des Stelltriebs zur Ermittlung der Sollstellzeit $t_{Soll}$ kann mindestens eine Stellposition verwendet werden, die anhand einer detektierbaren Änderung der Stromaufnahme I des zugeordneten Getriebestellers ermittelbar ist.

Ebenso kann als Bezugsposition $x_{Ref1}$, $x_{Ref2}$ des Stelltriebs mindestens eine Stellposition verwendet werden, die während eines Verfahrens des betreffenden Stelltriebs unter gleichzeitiger Belastung des Getriebestellers des anderen Stelltriebs anhand einer detektierbaren Änderung der Stromaufnahme I des Getriebestellers des anderen Stelltriebs ermittelbar ist.

Des Weiteren kann auch mindestens eine Stellposition als Bezugsposition $x_{Ref1}$, $x_{Ref2}$ des Stelltriebs verwendet werden, die mittels eines funktionstüchtigen Positionssensors der Sensoreinrichtung desselben Stelltriebs ermittelbar ist.

Schließlich kann als Bezugsposition $x_{Ref1}$, $x_{Ref2}$ des Stelltriebs zur Ermittlung der Sollstellzeit $t_{Soll}$ auch mindestens eine Stellposition verwendet werden, die während eines Verfahrens des betreffenden Stelltriebs unter gleichzeitiger Belastung des Getriebestellers des anderen Stelltriebs mittels eines Weg- oder Positionssensors der Sensoreinrichtung des anderen Stelltriebs ermittelbar ist.

Aufgrund der baulichen Gegebenheiten werden bei einem Ausfall der Wählsensoreinrichtung bevorzugt ein erster Endanschlag des Wähltriebs als erste Bezugsposition $x_{Ref1}$ und ein in Wählrichtung gegenüberliegender zweiter Endanschlag des Wähltriebs als zweite Bezugsposition $x_{Ref2}$ verwendet.

In diesem Fall kann beim Anfahren eines der Endanschläge durch den Wähltrieb das Erreichen des betreffenden Endanschlags ohne ein Sensorsignal der Wählsensoreinrichtung anhand eines detektierbaren Anstiegs der Stromaufnahme I des Wählstellers, also einem Anstieg der Stromaufnahme I des Wählstellers über einen vorgegebenen oberen Grenzwert $I_{Gr/o}$, ermittelt werden. Dabei wird die Eigenschaft des als Gleichstrom-Elektromotor ausgebildeten Wählstellers ausgenutzt, dass bei weitgehend konstant gehaltener Versorgungsspannung U dessen Stromaufnahme I beim Anfahren gegen einen grö-βeren mechanischen Widerstand, wie des vorliegend vorgesehenen Endanschlags, stark ansteigt. Dieser Anstieg der Stromaufnahme I des Elektromotors ist detektierbar und steht einem zugeordneten Steuergerät als Steuerungssignal zur Verfügung.

Bei einem Ausfall der Schaltsensoreinrichtung wird dagegen bevorzugt eine mittlere Neutralposition des Schalttriebs als erste Bezugsposition $x_{Ref1}$ und eine in Gangrichtung liegende Synchronposition, in der die Synchronringe einer synchronisierten Gangkupplung des betreffenden Gangs angelegt sind, als zweite Bezugsposition $x_{Ref2}$ verwendet. Die Verwendung der Synchronposition als zweite Bezugsposition $x_{Ref2}$ hat den Vorteil, dass sie von der Neutralposition aus ohne das Einlegen des betreffenden Gangs anfahrbar ist, und dass ihr Erreichen ohne ein Sensorsignal der Schaltsensoreinrichtung anhand eines detektierbaren Anstiegs der Stromaufnahme I des Schaltstellers, also einen Anstieg der Stromaufnahme I des Schaltstellers über einen vorgegebenen oberen Grenzwert $I_{Gr/o}$, ermittelt werden kann.

Alternativ dazu kann bei einem Ausfall der Schaltsensoreinrichtung neben der mittleren Neutralposition des Schalttriebs als erste Bezugsposition $x_{Ref1}$ auch eine in Gangrichtung liegende Schaltposition, in der die Gangkupplung des betreffenden Gangs eingerückt ist, als zweite Bezugsposition $x_{Ref2}$ verwendet werden. Die Verwendung der Schaltposition als zweite Bezugsposition $x_{Ref2}$ hat den Vorteil, dass das Erreichen des zugeordneten Endanschlags ohne ein Sensorsignal der Schaltsensoreinrichtung anhand eines detektierbaren Anstiegs der Stromaufnahme I des Schaltstellers, also einem Anstieg der Stromaufnahme I des Schaltstellers über einen vorgegebenen oberen Grenzwert $I_{Gr/o}$, ermittelt werden kann. Das Anfahren der Schaltstellung ist jedoch nur in Verbindung mit einem Einlegen des betreffenden Gangs möglich, so dass die Ermittlung der Sollstellzeit $t_{Soll}$ für das Einlegen eines bestimmten Gangs jeweils in dem vorhergehenden Schaltvorgang desselben Gangs ermittelt werden muss.

Beim Anfahren der Neutralposition durch den Schalttrieb kann das Erreichen der Neutralposition des Schalttriebs unter gleichzeitiger Belastung des Wählstellers anhand eines detektierbaren Abfalls der Stromaufnahme I des Wählstellers, also einem Abfall der Stromaufnahme I des Wählstellers unter einen vorgegebenen unteren Grenzwert $I_{Gr/u}$, und/oder mittels eines Weg- oder Positionssensors der Wählsensoreinrichtung ermittelt werden. Durch die Belastung des Wähltriebs in eine beliebige Richtung wird der betreffende Schaltfinger der Schaltwelle in Wählrichtung belastet, jedoch nur geringfügig bis zu einem z.B. durch eine Gehäuserippe gebildeten Anschlag ausgelenkt, solange sich der Schalttrieb außerhalb der Neutralposition befindet. Aufgrund des durch den Anschlag gebildeten mechanischen Widerstands steigt die Stromaufnahme I des Wählstellers an. Mittels der funktionstüchtigen Wählsensoreinrichtung wird zudem die vorliegende Wählposition festgestellt. Wird dann durch die Betätigung des Schalttriebs die Neutralposition der Schaltgasse erreicht, fällt der durch den Anschlag gebildete mechanische Widerstand des Wähltriebs weg und der Schaltfinger wird von dem Wählsteller in Wählrichtung ausgelenkt. Dies führt einerseits zu einem detektierbaren Abfall der Stromaufnahme I des Wählstellers und andererseits zu einer entsprechenden Änderung des mittels der funktionstüchtigen Wählsensoreinrichtung erfassten Positionssignals.

Nach der Ermittlung der Neutralposition wird der Wähltrieb zur Kompensation der Auslenkung in Wählrichtung vorteilhaft durch das Anlegen eines längeren elektrischen Gegenspannungsimpulses an den Wählsteller abgebremst und in die Wählposition zurückgefahren. Ebenfalls wird dann der Schalttrieb zur Vermeidung einer Übersteuerung zweckmäßig durch das Anlegen eines kurzen elektrischen Gegenspannungsimpulses an den Schaltsteller abgebremst.

Bei der Stellfunktion zum Anfahren der Zielposition $x_{Ziel}$ kann die erste Bezugsposition $x_{Ref1}$ zur Ermittlung der Sollstellzeit $t_{Soll}$ als Startposition $x_{Start}$ verwendet werden, was den Vorteil einer identischen Bewegungsrichtung der Stellfunktion und des Verfahrens des Stelltriebs zur Ermittlung der Sollstellzeit $t_{Soll}$ hat, jedoch bei einer Ermittlung der Sollstellzeit $t_{Soll}$ unmittelbar vor der Durchführung der Stellfunktion das Zurückfahren des Stelltriebs von der zweiten Bezugsposition $x_{Ref2}$ zur ersten Bezugsposition $x_{Ref1}$ erfordert.

Die Berechnung der Sollstellzeit $t_{Soll}$ erfolgt in diesem Fall zweckmäßig durch eine Interpolation oder eine Extrapolation der als Verfahrdauer zwischen der ersten Bezugsposition $x_{Ref1}$ und der zweiten Bezugsposition $x_{Ref2}$ gemessenen Stellzeit $t_{Mess}$ mit dem Verhältnis des bekannten Stellweges zwischen der ersten Bezugsposition $x_{Ref1}$ und der Zielposition $x_{Ziel}$ zu dem bekannten Stellweg zwischen der ersten Bezugsposition $x_{Ref1}$ und der zweiten Bezugsposition $x_{Ref2}$, welches z.B. einer Berechnung nach der Gleichung

$$t_{Soll} = (t_{Mess} - \Delta t_{Anf} + \Delta t_{Nach}) * |(x_{Ziel} - x_{Ref1}) / (x_{Ref2} - x_{Ref1})| + \Delta t_{Anf} - \Delta t_{Nach}$$

entspricht.

So erfolgt beispielsweise beim Einlegen eines synchronisierten Gangs mittels des Schaltstellers das Anfahren einer der Synchronposition des betreffenden Gangs entsprechenden Zielposition $x_{Ziel}$ bevorzugt von der Neutralposition des Schalttriebs aus.

Dabei wird bei einem nachfolgenden Anfahren einer der Schaltposition des betreffenden Gangs entsprechenden Zielposition $x_{Ziel2}$, das dem Einrücken des Gangs entspricht, die von der Synchronposition aus erfolgende Zeitmessung und/oder die von der Synchronposition aus erfolgende Stellwegberechnung zweckmäßig weitergeführt.

Beim Erreichen der Schaltposition des Gangs und dem damit verbundenen Anfahren des betreffenden Endanschlags durch den Schalttrieb wird der Strom I des Schaltstellers vorteilhaft mit einer Rampenfunktion abgestellt, um ein Zurückprellen des Schaltriebs in Verbindung mit einem zumindest teilweisen Ausrücken des Gangs zu vermeiden.

Bei der Stellfunktion zum Anfahren der Zielposition $x_{Ziel}$ kann jedoch auch die zweite Bezugsposition $x_{Ref2}$ zur Ermittlung der Sollstellzeit $t_{Soll}$ als Startposition $x_{Start}$ verwendet werden, was den Vorteil einer sofortigen Durchführbarkeit der Stellfunktion bei einer unmittelbar vorhergehenden Ermittlung der Sollstellzeit $t_{Soll}$ bietet, jedoch mit dem möglichen Nachteil einer entgegengesetzten Bewegungsrichtung der Stellfunktion und des Verfahrens des Stelltriebs zur Ermittlung der Sollstellzeit $t_{Soll}$ verbunden ist.

Die Berechnung der Sollstellzeit $t_{Soll}$ erfolgt in diesem Fall zweckmäßig durch ein Interpolieren oder Extrapolieren der als Verfahrdauer zwischen der ersten Bezugsposition $x_{Ref1}$ und der zweiten Bezugsposition $x_{Ref2}$ gemessenen Stellzeit $t_{Mess}$ mit dem Verhältnis des bekannten Stellweges zwischen der zweiten Bezugsposition $x_{Ref2}$ und der Zielposition $x_{Ziel}$ zu dem bekannten Stellweg zwischen der ersten Bezugsposition $x_{Ref1}$ und der zweiten Bezugsposition $x_{Ref2}$, was z.B. einer Berechnung nach der Gleichung

$$t_{Soll} = (t_{Mess} - \Delta t_{Anf} + \Delta t_{Nach}) * |(x_{Ziel} - x_{Ref2}) / (x_{Ref2} - x_{Ref1})| + \Delta t_{Anf} - \Delta t_{Nach}$$

entspricht.

Entsprechend dieser Verfahrensvariante erfolgt beim Anfahren einer Schaltgasse mittels des Wählstellers das Anfahren einer der betreffenden Schaltgasse entsprechenden Zielposition $x_{Ziel}$ bevorzugt von dem zweiten Endanschlag des Wähltriebs aus.

Dabei wird beim Erreichen der Schaltgasse der Wählsteller zweckmäßig mit einem Gegenspannungsimpuls gestoppt, um ein Übersteuern des Wähltriebs zu vermeiden, wenn es sich um eine mittlere Schaltgasse handelt.

Wenn es sich dagegen um eine äußere Schaltgasse handelt, in welcher der Wähltrieb einen Endanschlag aufweist, wird beim Erreichen der Schaltgasse der Strom I des Wählstellers bevorzugt mit einer Rampenfunktion abgestellt, um ein Zurückprellen des Wähltriebs von dem Endanschlag und damit ein zumindest teilweises Verlassen der betreffenden Schaltgasse durch den zugeordneten Schaltfinger der Schaltwelle zu vermeiden.

Innerhalb der Stellfunktion und/oder der Funktion zur Ermittlung der Sollstellzeit $t_{Soll}$ wird zur Berechnung der jeweiligen Stellwegposition s bevorzugt die Klemmenspannung U und die Stromaufnahme I des betreffenden Getriebestellers erfasst, und die Berechnung der Stellwegposition s mit dem Innenwiderstand R des Getriebestellers und einer gerätespezifischen Konstante K nach der Gleichung

$$s = K * \int (U - I * R) \, dt$$

berechnet. In dieser Gleichung bewirkt der über die Zeit zu integrierende Term (U - I * R) dt bei konstant gehaltener Spannung U ein mit sinkendem Stellwiderstand und entsprechend zunehmender Stellgeschwindigkeit ansteigendes Stellweginkrement ds sowie bei Stillstand des betreffenden Getriebestellers unter Last ein Stellweginkrement ds von etwa Null (ds $\approx$ 0). Die gerätespezifische Konstante K berücksichtigt neben den elektromotorischen Eigenschaften des den betreffenden Wähl- oder Schaltsteller bildenden Elektromotors auch die Übersetzung und den Wirkungsgrad des zugeordneten Wähl- oder Schalttriebs.

Zur Erzielung einer hohen Genauigkeit bei der Berechnung der Stellwegposition s wird der gültige Wert $R_{neu}$ des bei der Berechnung der Stellwegposition s verwendeten Innenwiderstands R des elektromotorischen Getriebestellers, der insbesondere temperaturabhängig ist, vorteilhaft mittels eines vor oder während der Ausführung der Stellfunktion ermittelten aktuellen Wertes $R_{akt}$ des Innenwiderstands adaptiert.

Der gültige Wert $R_{neu}$ des Innenwiderstands R des Getriebestellers kann durch eine Korrektur des zuvor gültigen Wertes $R_{alt}$ des Innenwiderstands in Richtung des aktuellen Wertes $R_{akt}$ des Innenwiderstands auch nach einem beliebigen Algorithmus adaptiert werden ($R_{neu}$ = f ($R_{alt}$, $P_{akt}$)). Der aktuelle Wert $R_{akt}$ des Innenwiderstands R des Getriebestellers kann aber auch einfach als neuer gültiger Wert $R_{neu}$ des Innenwiderstands verwendet werden ($R_{neu}$ = $R_{akt}$).

Der jeweils aktuelle Wert $R_{akt}$ des Innenwiderstands R wird bevorzugt während einer Belastung des betreffenden Getriebestellers mit einem über einer Mindeststromhöhe $I_{min}$ liegenden Strom I aus der erfassten Klemmenspannung U und der erfassten Stromaufnahme I des Getriebestellers nach der ohmschen Gleichung $R_{akt}$ = U / I berechnet.

Der aktuelle Wert $R_{akt}$ des Innenwiderstands R des betreffenden Getriebestellers kann bei ruhendem Stelltrieb während einer Belastung des Stelltriebs durch den Getriebesteller gegen einen hohen Stellwiderstand ermittelt werden.

Demzufolge ist zweckmäßig vorgesehen, dass der Wähltrieb an einem der beiden Endanschläge durch den Wählsteller gegen den betreffenden Endanschlag belastet wird, und dass ein aktueller Wert $R_{akt}$ des Innenwiderstands R des Wählstellers während der Belastung ermittelt wird.

Ebenso ist es sinnvoll, dass der Schalttrieb in der Synchronposition eines Gangs durch den Schaltsteller in Gangrichtung oder in der Schaltposition eines Gangs durch den Schaltsteller gegen den zugeordneten Endanschlag belastet wird, und dass ein aktueller Wert $R_{akt}$ des Innenwiderstands R des Schaltstellers während der Belastung ermittelt wird.

Zusätzlich oder alternativ dazu kann der aktuelle Wert $R_{akt}$ des Innenwiderstands R des betreffenden Getriebestellers auch bei bewegtem Stelltrieb während einer Belastung des betreffenden Getriebestellers in Bewegungsrichtung ermittelt werden.

Demzufolge kann auch vorgesehen sein, dass während des Verfahrens des Wähltriebs zwischen den beiden Endanschlägen ein aktueller Wert $R_{akt}$ des Innenwiderstands R des Wählstellers ermittelt wird, und/oder dass während des Verfahrens des Schalttriebs zwischen der Neutralposition und der Synchronposition eines Gangs ein aktueller Wert $R_{akt}$ des Innenwiderstands R des Schaltstellers ermittelt wird.

Bei der Feststellung eines aktuellen Wertes $R_{akt}$ des Innenwiderstands R während des Verfahrens des zugeordneten Stelltriebs erfolgt die Ermittlung des aktuellen Wertes $R_{akt}$ nach dem Anfahren des betreffenden Getriebestellers zur Einstellung eines stationären Betriebszustands bevorzugt zeitlich verzögert, wodurch die Genauigkeit der mit dem aktuellen Wert $R_{akt}$ berechneten Stellwegposition s deutlich erhöht wird.

Eine weitere Erhöhung der Genauigkeit des berechneten Stellweges s kann dadurch erreicht werden, dass der ermittelte aktuelle Wert $R_{akt}$ des Innenwiderstands R mit einem zulässigen unteren Widerstandsgrenzwert $R_{min}$ und einem zulässigen oberen Widerstandsgrenzwert $R_{max}$ verglichen wird, und im Fall einer Überschreitung eines der Widerstandsgrenzwerte $R_{min}$, $R_{max}$ gleich dem Wert des überschrittenen Widerstandsgrenzwertes gesetzt wird ($R_{akt}$ = $R_{min}$ bzw. Rakt = Rmax).

Die bei der Durchführung der Stellfunktion gegebenenfalls auszuführende und weiter vorne genannte Fehlerfunktion kann einen Abbruch der aktuellen Stellfunktion und das erneute Anfahren der Startposition $x_{Start}$ der aktuellen Stellfunktion vorsehen.

Im Rahmen der Fehlerfunktion kann zudem ein Rütteln, also ein schnelles Hin- und Herbewegen des Wähltriebs und/oder des Schalttriebs während des Anfahrens der Startposition $x_{Start}$ vorgesehen sein, wodurch mögliche mechanische Verklemmungen gelöst werden.

Schließlich kann im Rahmen der Fehlerfunktion eine Wiederholung der abgebrochenen Stellfunktion aus der Startposition $x_{Start}$ vorgesehen sein. Alternativ dazu kann die Fehlerfunktion jedoch auch einen Abbruch des aktuellen Wähl- oder Schaltvorgangs vorsehen, welches zweckmäßig mit dem Anfahren einer jeweils detektierbaren Sicherheitsposition des Wähltriebs und/oder des Schalttriebs verbunden ist, und bedarfsweise die Ausgabe eines akustischen und/oder optischen Warnsignals und/oder das Abspeichern einer entsprechenden Fehlermeldung in einem Fehlerspeicher eines Getriebesteuerungsgerätes einschließt.

Bevorzugt wird zu Beginn der Fehlerfunktion eine Fehlerdiagnose durchgeführt, und die auszuführenden Teilfunktionen der Fehlerfunktion werden in Abhängigkeit des Ergebnisses der Fehlerdiagnose bestimmt.

Die bei der Durchführung der Funktion zur Ermittlung der Sollstellzeit $t_{Soll}$ gegebenenfalls durchzuführende Störungsfunktion kann einen Abbruch der aktuellen Ermittlung der Sollstellzeit $t_{Soll}$ und das Anfahren der ersten Bezugsposition $X_{Ref1}$, der zweiten Bezugsposition $x_{Ref2}$ oder einer weiteren detektierbaren Bezugsposition $x_{Ref3}$ vorsehen.

Im Rahmen der Störungsfunktion kann zum Lösen einer möglicherweise vorliegenden mechanischen Verklemmung ebenfalls ein Rütteln des Wähltriebs und/oder des Schalttriebs während des Anfahrens der Bezugsposition $x_{Ref1}$, $x_{Ref2}$, $x_{Ref3}$ vorgesehen sein. Ein solches Rütteln ist dadurch erreichbar, dass der betroffene Elektromotor kurzzeitig und schnell nacheinander in entgegengesetzten Drehrichtungen betrieben wird.

Schließlich kann im Zusammenhang mit der Störungsfunktion eine Wiederholung der abgebrochenen Ermittlung der Sollstellzeit $t_{Soll}$ von der Bezugsposition $x_{Ref1}$, $x_{Ref2}$, $x_{Ref3}$ aus ausgelöst werden. Alternativ dazu kann die Störungsfunktion jedoch auch eine Verwendung einer in einem vorhergehenden Zyklus ermittelten Sollstellzeit $t_{Soll/alt}$ vorsehen ($t_{Soll}$ = $t_{Soll/alt}$). Bevorzugt wird zu Beginn der Störungsfunktion eine Störungsdiagnose durchgeführt, und die auszuführenden Teilfunktionen der Störungsfunktion werden in Abhängigkeit des Ergebnisses der Störungsdiagnose bestimmt.

Eine zweite Möglichkeit zur Lösung der gestellten Aufgabe ist dem von dem Anspruch 1 unabhängigen Anspruch 58 entnehmbar, bei dem die Positionseinstellung des jeweils betroffenen Getriebestellers weggesteuert erfolgt.

Auch hierbei betrifft die Erfindung ein Verfahren zur Notsteuerung eines automatisierten Schaltgetriebes, bei dem Wähl- und Schaltvorgänge über eine um ihre Längsachse drehbar und axial verschiebbar gelagerte Schaltwelle einleitbar sind, die mittels eines Wähltriebs mit einem als Gleichstrom-Elektromotor ausgebildeten Wählsteller in einer Wählbewegungsrichtung und mittels eines Schalttriebs mit einem als Gleichstrom-Elektromotor ausgebildeten Schaltsteller in einer Schaltbewegungsrichtung verstellbar ist, und deren aktuelle Wähl- und Schaltpositionen im Normalbetrieb mittels einer mit dem Wähltrieb in Wirkverbindung stehenden Wählsensoreinrichtung und mittels einer mit dem Schalttrieb in Wirkverbindung stehenden Schaltsensoreinrichtung ermittelbar sind, wobei bei einem Ausfall einer der Sensoreinrichtungen eine Stellwegposition des betreffenden Stelltriebs ersatzweise durch eine Auswertung mindestens eines elektrischen Kennwertes eines der Elektromotoren ermittelt wird. Gemäß der Erfindung ist dazu vorgesehen, dass innerhalb eines Wähl- oder Schaltvorgangs der Getriebesteller des von dem Ausfall der Sensoreinrichtung betroffenen Stelltriebs bei einer Stellfunktion zum Anfahren einer Zielposition $x_{Ziel}$ von einer Startposition $x_{Start}$ aus mit den folgenden Schritten gesteuert wird:

- Betätigen des betreffenden Getriebestellers;
- Erfassen der Klemmenspannung U und der Stromaufnahme I des betreffenden Getriebestellers sowie Berechnung der aktuellen Stellwegposition s mit dem Innenwiderstand R des Getriebestellers und einer gerätepezifischen Konstante K mit der Gleichung $s = K * \int (U - I * R) \, dt$ und
- weiteres Betätigen des Getriebestellers, wenn eine vorgegebene Zielposition $x_{Ziel}$ des Schalt- oder Wählvorgangs noch nicht erreicht ist;
- oder Stoppen des Getriebestellers, wenn eine vorgegebene Zielposition $x_{Ziel}$ des Schalt- oder Wählvorgangs erreicht ist.

Zur Verbesserung der Genauigkeit des Stellvorgangs kann sowohl für Schalt- als auch für Wählvorgänge vorgesehen sein, dass das Erreichen der Zielposition $x_{Ziel}$ zusätzlich durch einen Vergleich der Betätigungsdauer mit vorbestimmten Betätigungszeiträumen überprüft wird. Dabei kann von einem oder mehreren der bereits erläuterten Verfahrensausgestaltungen des Verfahrens gemäß Anspruch 1 sowie dessen Ausgestaltungen und Weiterbildungen Gebrauch gemacht werden.

Zur Verdeutlichung der Erfindung ist der Beschreibung eine Zeichnung mit Ausführungsbeispielen beigefügt. In diesen zeigt

Fig. 1    einen erfindungsgemäßen Steuerungsablauf zum Einlegen eines synchronisierten Gangs in Form eines Ablaufdiagramms und

Fig. 2    einen erfindungsgemäßen Steuerungsablauf zur Ermittlung einer Sollstellzeit des Wähltriebs in Form eines Ablaufdiagramms.

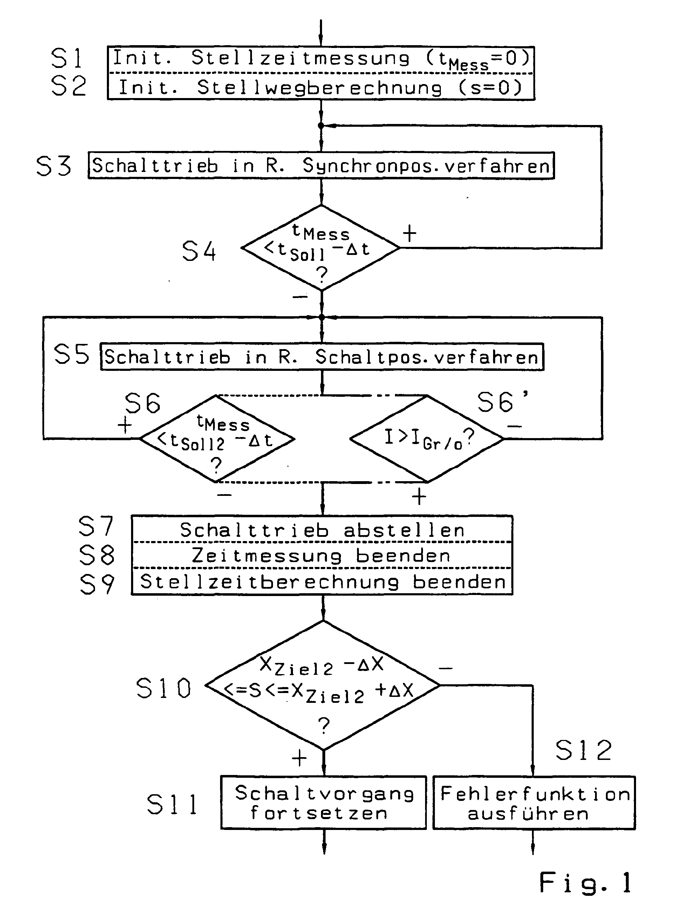

In dem Ablaufdiagramm gemäß Fig. 1 ist ein erfindungsgemäßer Steuerungsablauf eines automatisierten Schaltgetriebes am Beispiel eines innerhalb eines Schaltvorgangs erfolgenden Stellfunktion zum Einlegen eines synchronisierten Gangs von der Neutralposition des betreffenden Schalttriebs bzw. der betreffenden Schaltgasse aus dargestellt, wobei von dem zuvor festgestellten Ausfall einer zugeordneten Schaltsensoreinrichtung ausgegangen wird.

Zunächst werden in den Schritten S1 und S2 eine Stellzeitmessung und eine Stellwegberechnung initialisiert, d.h. die Variable der gemessenen Stellzeit $t_{Mess}$ und die Variable der berechneten Stellwegposition s jeweils gleich Null gesetzt sowie die Stellzeitmessung und die Stellwegberechnung gestartet. Die jeweilige Stellwegposition s wird nachfolgend kontinuierlich aus der erfassten Klemmenspannung U und der erfassten Stromaufnahme I des als Schaltsteller verwendeten Elektromotors zusammen mit dem bekannten Innenwiderstand R des Elektromotors und einer gerätespezifischen Konstante K des Schalttriebs bevorzugt nach der Gleichung $s = K * \int (U - I\,R)\,dt$ berechnet.

Danach wird der Schalttrieb mit Schritt S3 in die Richtung (R.) der Synchronposition des betreffenden Gangs verfahren, solange die gemessene Stellzeit $t_{Mess}$ innerhalb einer Stellzeittoleranz $\Delta t$ eine vorab für das Erreichen der Synchronposition bestimmte Sollstellzeit $t_{Soll}$ nicht erreicht oder überschritten hat, was in Schritt S4 geprüft wird.

Wenn die Sollstellzeit $t_{Soll}$ von der gemessenen Stellzeit $t_{Mess}$ erreicht oder überschritten ist, gilt die Synchronposition als erreicht. Danach wird der Schalttrieb durch den Schaltsteller unter Synchronisierung des Gangs weiter in die Richtung der Schaltposition verfahren, um die betreffende Gangkupplung einzurücken und damit den betreffenden Gang einzulegen (Schritt S5). Die Stellzeitmessung und die Stellwegberechnung wird dabei fortgesetzt.

Das Verfahren des Schalttriebs in Richtung der Schaltposition wird durchgeführt, solange die gemessene Stellzeit $t_{Mess}$ innerhalb einer Stellzeittoleranz $\Delta t$ eine vorab für das Erreichen der Schaltposition bestimmte Sollstellzeit $t_{Soll2}$ nicht erreicht oder überschritten hat, was in Schritt S6 geprüft wird. Da der Schalttrieb in der Schaltposition einen Endanschlag aufweist, kann das Erreichen der Schaltposition alternativ dazu auch dadurch festgestellt werden, dass das Überschreiten eines oberen Strom-Grenzwertes $I_{Gr/o}$ durch die Stromaufnahme I des betreffenden Elektromotors festgestellt wird (Schritt S6').

Wenn die gemessene Stellzeit $t_{Mess}$ die Sollsteilzeit $t_{Soll2}$ erreicht oder überschritten hat, oder die Stromaufnahme I des Schaltstellers den oberen Strom-Grenzwert $I_{Gr/o}$ überschritten hat, wird zunächst von dem Erreichen der Schaltposition ausgegangen und in den nachfolgenden Schritten S7 bis S9 der Schalttrieb durch eine entsprechende Ansteuerung des Schaltstellers abgestellt sowie die Stellzeitmessung und die Stellwegberechnung beendet.

Da die zeitabhängige Steuerung des Stelltriebs mit einer gewissen Unsicherheit verbunden ist, wird danach in Schritt S10 geprüft, ob die berechnete Stellwegposition s innerhalb einer Stellwegtoleranz $\pm\Delta x$ die aus der Geometrie des Schalttriebs bekannte, der Schaltposition entsprechende Zielposition $x_{Ziel2}$ erreicht hat. Wenn dies der Fall ist, wird der Schaltvorgang, z.B. durch das Einrücken der Trennkupplung zum Antriebsmotor und den Lastaufbau des Antriebsmotors, fortgesetzt (Schritt S11).

Wenn die berechnete Stellwegposition s die Schaltposition $x_{Ziel2}$ jedoch nicht erreicht hat, wird eine Fehlerfunktion ausgeführt (Schritt S12), die einen Abbruch und eine Wiederholung der betreffenden Stellfunktion (Synchronisieren und Einlegen des Gangs) des aktuellen Schaltvorgangs oder einen Abbruch des Schaltvorgangs und die Ausgabe eines akustischen und/oder optischen Warnsignals beinhalten kann.

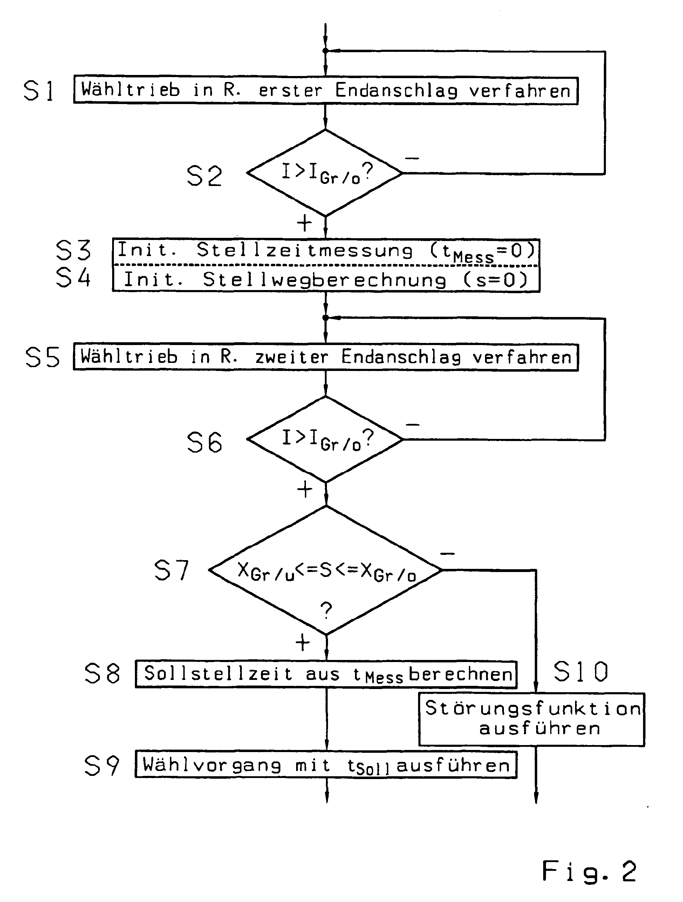

In dem Ablaufdiagramm gemäß Fig. 2 ist ein erfindungsgemäßer Steuerungsablauf zur Ermittlung der Sollstellzeit $t_{Soll}$ beispielhaft für den Wähltrieb eines automatisierten Schaltgetriebes dargestellt, wobei von dem Ausfall einer zugeordneten Wählsensoreinrichtung ausgegangen wird.

Zunächst wird der Wähltrieb durch den als Elektromotor ausgebildeten Wählsteller solange in Richtung (R.) eines ersten Endanschlags verfahren (Schritt S1), bis die Stromaufnahme I des Elektromotors einen festgelegten oberen Grenzwert $I_{Gr/o}$ überschritten hat, was in Schritt S2 geprüft wird. Wenn die Bedingung erfüllt ist, gilt der erste Endanschlag der Wählgasse als erreicht.

Danach werden in den Schritten S3 und S4 eine Stellzeitmessung und eine Stellwegberechnung initialisiert, d.h. die Variable der gemessenen Stellzeit $t_{Mess}$ und die Variable der berechneten Stellwegposition s jeweils gleich Null gesetzt sowie die Stellzeitmessung und die Stellwegberechnung gestartet. Die jeweilige Stellwegposition s wird nachfolgend kontinuierlich aus der erfassten Klemmenspannung U und der erfassten Stromaufnahme I des als Schaltsteller verwendeten Elektromotors zusammen mit dem bekannten Innenwiderstand R des Elektromotors und einer gerätespezifischen Konstante K des Schalttriebs bevorzugt nach der Gleichung $s = K * \int (U - I * R)\, dt$ berechnet.

Daraufhin wird der Wähltrieb durch eine entsprechende Ansteuerung des Wählstellers solange in Richtung zum gegenüberliegenden zweiten Endanschlag der Wählgasse verfahren (Schritt S5), bis das Erreichen des zweiten Endanschlags anhand eines erneuten Überschreitens des oberen Grenzwertes $I_{Gr/o}$ durch die Stromaufnahme I des Elektromotors erkannt wird (Schritt S6). Danach wird in Schritt S7 geprüft, ob die berechnete Stellwegposition s innerhalb einer durch einen unteren Stellweggrenzwert $x_{Gr/u}$ und einen oberen Stellweggrenzwert $x_{Gr/o}$ definierten Toleranzbreite die aus der Geometrie des Wähltriebs bekannte Stellwegposition des zweiten Endanschlags erreicht hat.

Wenn diese Bedingung gemäß Schritt S7 erfüllt ist, entspricht die gemessene Stellzeit $t_{Mess}$ mit hoher Genauigkeit der Verfahrzeit zwischen den beiden Endanschlägen. Demzufolge wird dann in Schritt S8 aus der gemessenen Stellzeit $t_{Mess}$ und der bekannten Geometrie des Wähltriebs die Sollstellzeit $t_{Soll}$ für eine bevorstehende Wählfunktion eines beliebigen Wählvorgangs berechnet. Danach wird die betreffende Wählfunktion unter Verwendung der berechneten Sollstellzeit $t_{Soll}$ zeitgesteuert ausgeführt (Schritt S9).

Wenn die Bedingung jedoch nicht erfüllt ist, wird eine Störungsfunktion ausgeführt (Schritt S10), die einen Abbruch und eine Wiederholung der Funktion zur Ermittlung der Sollstellzeit $t_{Soll}$ des betreffenden Wählvorgangs oder die Verwendung einer zuvor ermittelten Sollstellzeit $t_{Soll/alt}$ beinhalten kann.

Bezugszeichen

| | |
|---|---|
| I | Strom, Stromaufnahme |
| $I_{Gr/o}$ | Oberer Strom-Grenzwert von I |
| $I_{Gr/u}$ | Unterer Strom-Grenzwert von I |
| $I_{min}$ | Mindeststromhöhe |
| K | Konstante |
| R | Elektrischer Widerstand, Innenwiderstand |
| $R_{akt}$ | Aktueller Wert von R |
| $R_{alt}$ | Zuvor gültiger Wert von R |
| $R_{max}$ | Oberer Widerstandsgrenzwert |
| $R_{min}$ | Unterer Widerstandsgrenzwert |
| $R_{neu}$ | Gültiger Wert von R |
| s | Stellweg, Stellwegposition |
| ds | Stellweginkrement |
| S1 - S12 | Verfahrensschritte |
| S6' | Alternativer Verfahrensschritt |
| $t_{Gr/o}$ | Oberer Stellzeitgrenzwert |
| $t_{Gr/u}$ | Unterer Stellzeitgrenzwert |
| $t_{Mess}$ | Gemessene Stellzeit |
| $t_{Soll}$ | Sollstellzeit |
| $t_{Soll2}$ | Zweite Sollstellzeit |
| $t_{Soll/alt}$ | Vorhergehend ermittelte Sollstellzeit |
| $\Delta t$ | Stellzeittoleranz |
| $\Delta t_{Anf}$ | Anfahrzeit |
| $\Delta t_{Nach}$ | Nachlaufzeit |
| U | Spannung, Klemmenspannung |
| $x_{Gr/o}$ | Oberer Stellweggrenzwert |
| $x_{Gr/u}$ | Unterer Stellweggrenzwert |
| $x_{Ref1}$ | Erste Bezugsposition |
| $x_{Ref2}$ | Zweite Bezugsposition |
| $x_{Ref3}$ | Dritte Bezugsposition |
| $x_{Start}$ | Startposition |
| $x_{Ziel}$ | Zielposition |
| $x_{Ziel2}$ | Zweite Zielposition |
| $\Delta x$ | Stellwegtoleranz |

**EP 2 195 558 B1**

**Patentansprüche**

1. Verfahren zur Notsteuerung eines automatisierten Schaltgetriebes, bei dem Wähl- und Schaltvorgänge über eine um ihre Längsachse drehbar und axial verschiebbar gelagerte Schaltwelle einleitbar sind, die mittels eines Wähltriebs mit einem als Gleichstrom-Elektromotor ausgebildeten Wählsteller in einer Wählbewegungsrichtung und mittels eines Schalttriebs mit einem als Gleichstrom-Elektromotor ausgebildeten Schaltsteller in einer Schaltbewegungsrichtung verstellbar ist, und deren aktuelle Wähl- und Schaltpositionen im Normalbetrieb mittels einer mit dem Wähltrieb in Wirkverbindung stehenden Wählsensoreinrichtung und mittels einer mit dem Schalttrieb in Wirkverbindung stehenden Schaltsensoreinrichtung ermittelbar sind, wobei bei einem Ausfall einer der Sensoreinrichtungen eine Stellwegposition des betreffenden Stelltriebs ersatzweise durch eine Auswertung mindestens eines elektrischen Kennwertes eines der Elektromotoren ermittelt wird, **dadurch gekennzeichnet, dass** innerhalb eines Wähl- oder Schaltvorgangs der Getriebesteller des von dem Ausfall der Sensoreinrichtung betroffenen Stelltriebs bei einer Stellfunktion zum Anfahren einer Zielposition $x_{Ziel}$ von einer Startposition $x_{Start}$ aus mit den folgenden Schritten gesteuert wird:

   A) Initialisierung einer Stellzeitmessung;
   B) Verfahren des Stelltriebs in Richtung der Zielposition $x_{Ziel}$;
   C) Vergleich der gemessenen Stellzeit $t_{Mess}$ mit einer vorab bestimmten Sollstellzeit $t_{Soll}$;
   D) Weiteres Verfahren des Stelltriebs in Richtung der Zielposition $x_{Ziel}$ solange die gemessene Stellzeit $t_{Mess}$ kleiner als eine vorgegebene untere Toleranzschwelle ($t_{Soll} - \Delta t$) der Sollstellzeit $t_{Soll}$ ist ($t_{Mess} < t_{Soll} - \Delta t$);
   E) Abbremsen des Stelltriebs und Weiterführen des Wähl- oder Schaltvorgangs, wenn die gemessene Stellzeit $t_{Mess}$ größer oder gleich der unteren Toleranzschwelle ($t_{Soll} - \Delta t$) der Sollstellzeit $t_{Soll}$ ist ($t_{Mess} \geq t_{Soll} - \Delta t$).

2. Verfahren nach Anspruch 1, **dadurch gekennzeichnet, dass** bei der Durchführung der Stellfunktion

   F) zu Beginn zusätzlich eine Stellwegberechnung initialisiert wird;
   G) nachfolgend die Stellwegposition s aus mindestens einem erfassten elektrischen Kennwert des zugeordneten Getriebestellers berechnet wird;
   H) nach Ablauf der Sollstellzeit $t_{Soll}$ die berechnete Stellwegposition s mit der Zielposition $x_{Ziel}$ verglichen wird und
   I) eine Fehlerfunktion ausgeführt wird, wenn die berechnete Stellwegposition s innerhalb einer vorgegebenen Toleranzbreite $\pm \Delta x$ die Zielposition $x_{Ziel}$ nicht erreicht hat ($s < x_{Ziel} - \Delta x$, $s > x_{Ziel} + \Delta x$).

3. Verfahren nach Anspruch 1 oder 2, **dadurch gekennzeichnet, dass** die Stellzeitmessung und/oder die Berechnung der Stellwegposition s nach dem Erreichen der Zielposition $x_{Ziel}$ zum Anfahren einer weiteren, in derselben Stellrichtung liegenden Zielposition $x_{Ziel2}$ fortgesetzt wird.

4. Verfahren nach einem der Ansprüche 1 bis 3, **dadurch gekennzeichnet, dass** zur Bestimmung der Sollstellzeit $t_{Soll}$ die folgenden Schritte durchgeführt werden:

   J) Anfahren einer detektierbaren ersten Bezugsposition $x_{Ref1}$;
   K) Initialisierung einer Stellwegberechnung (s = 0) und einer Stellzeitmessung ($t_{Mess} = 0$);
   L) Verfahren des Stelltriebs in Richtung einer zweiten detektierbaren Bezugsposition $X_{Ref2}$ und
   M) gleichzeitige Berechnung der Stellwegposition s aus mindestens einem erfassten elektrischen Kennwert des zugeordneten Getriebestellers;
   N) Vergleich der berechneten Stellwegposition s mit vorgegebenen Stellweggrenzwerten $x_{Gr/u}$, $x_{Gr/o}$ und Vergleich der gemessenen Stellzeit $t_{Mess}$ mit vorgegebenen Stellzeitgrenzwerten $t_{Gr/u}$, $t_{Gr/o}$, wenn das Erreichen der zweiten Bezugsposition $x_{Ref2}$ detektiert wird;
   O) Abspeichern der gemessenen Stellzeit $t_{Mess}$ als Sollstellzeit $t_{Soll}$ ($t_{Soll} = t_{Mess}$) oder Berechnen der Sollstellzeit $t_{Soll}$ aus der gemessenen Stellzeit $t_{Mess}$ ($t_{Soll} = f(t_{Mess})$), wenn die berechnete Stellwegposition s innerhalb der Stellweggrenzwerte $X_{Gr/u}$, $x_{GR/o}$ ($x_{Gr/u} \leq s \leq x_{Gr/o}$) und die gemessene Stellzeit $t_{Mess}$ innerhalb der Stellzeitgrenzwerte $t_{Gr/u}$, $t_{Gr/o}$ liegt ($t_{Gr/u} \leq t_{Mess} \leq t_{Gr/o}$);
   P) Ausführen einer Störungsfunktion, wenn die berechnete Stellwegposition s außerhalb der Stellweggrenzwerte $x_{Gr/u}$, $x_{Gr/o}$ liegt, oder die gemessene Stellzeit $t_{Mess}$ außerhalb der Stellzeitgrenzwerte $t_{Gr/u}$, $t_{Gr/o}$ liegt.

5. Verfahren nach einem der Ansprüche 1 bis 4, **dadurch gekennzeichnet, dass** bei der Stellfunktion zum Anfahren der Zielposition $x_{Ziel}$ die erste Bezugsposition $X_{Ref1}$ zur Ermittlung der Sollstellzeit $t_{Soll}$ als Startposition $x_{Start}$ verwendet wird.

**13**

**6.** Verfahren nach Anspruch 5, **dadurch gekennzeichnet, dass** beim Einlegen eines synchronisierten Gangs mittels des Schaltstellers das Anfahren einer der Synchronposition des betreffenden Gangs entsprechenden Zielposition $x_{Ziel}$ von der Neutralposition des Schalttriebs aus erfolgt.

**7.** Verfahren nach Anspruch 3 und 6, **dadurch gekennzeichnet, dass** beim Einlegen eines synchronisierten Gangs das Anfahren einer der Schaltposition des betreffenden Gangs entsprechenden Zielposition $x_{Ziel2}$ unter Weiterführung der Zeitmessung und/oder der Stellwegberechnung von der Synchronposition aus erfolgt.

**8.** Verfahren nach Anspruch 7, **dadurch gekennzeichnet, dass** beim Erreichen der Schaltposition des Gangs der Strom I des Schaltstellers mit einer Rampenfunktion abgestellt wird.

**9.** Verfahren nach einem der Ansprüche 1 bis 4, **dadurch gekennzeichnet, dass** bei der Stellfunktion zum Anfahren der Zielposition $x_{Ziel}$ die zweite Bezugsposition $x_{Ref2}$ zur Ermittlung der Sollstellzeit $t_{Soll}$ als Startposition $x_{Start}$ verwendet wird.

**10.** Verfahren nach einem der Ansprüche 2 bis 9, **dadurch gekennzeichnet, dass** zur Berechnung der Stellwegposition s die Klemmenspannung U und die Stromaufnahme I des betreffenden Getriebestellers erfasst werden, und dass die Berechnung der Stellwegposition s mit dem Innenwiderstand R des Getriebestellers und einer gerätepezifischen Konstante K nach der Gleichung $s = K * \int (U - I * R)\, dt$ berechnet wird.

**11.** Verfahren nach Anspruch 10, **dadurch gekennzeichnet, dass** der gültige Wert $R_{neu}$ des in der Berechnung der Stellwegposition s verwendeten Innenwiderstands R des Getriebestellers mittels eines vor oder während der Ausführung der Stellfunktion ermittelten aktuellen Wertes $R_{akl}$ des Innenwiderstands adaptiert wird.

**12.** Verfahren nach einem der Ansprüche 2 bis 11, **dadurch gekennzeichnet, dass** die Fehlerfunktion einen Abbruch der aktuellen Stellfunktion und das erneute Anfahren der Startposition $X_{Start}$ der aktuellen Stellfunktion vorsieht.

**13.** Verfahren nach einem der Ansprüche 2 bis 11, **dadurch gekennzeichnet, dass** die Fehlerfunktion einen Abbruch des aktuellen Wähl- oder Schaltvorgangs vorsieht.

**14.** Verfahren nach einem der Ansprüche 2 bis 13, **dadurch gekennzeichnet, dass** zu Beginn der Fehlerfunktion eine Fehlerdiagnose durchgeführt wird, und dass die auszuführenden Teilfunktionen der Fehlerfunktion in Abhängigkeit des Ergebnisses der Fehlerdiagnose bestimmt werden.

**15.** Verfahren nach einem der Ansprüche 4 bis 14, **dadurch gekennzeichnet, dass** die Störungsfunktion einen Abbruch der aktuellen Ermittlung der Sollstellzeit $t_{Soll}$ und das Anfahren der ersten Bezugsposition $x_{Ref1}$, der zweiten Bezugsposition $x_{Ref2}$ oder einer weiteren detektierbaren Bezugsposition $x_{Ref3}$ vorsieht.

**16.** Verfahren nach einem der Ansprüche 4 bis 15, **dadurch gekennzeichnet, dass** zu Beginn der Störungsfunktion eine Störungsdiagnose durchgeführt wird, und dass die auszuführenden Teilfunktionen der Störungsfunktion in Abhängigkeit des Ergebnisses der Störungsdiagnose bestimmt werden.

**17.** Verfahren zur Notsteuerung eines automatisierten Schaltgetriebes, bei dem Wähl- und Schaltvorgänge über eine um ihre Längsachse drehbar und axial verschiebbar gelagerte Schaltwelle einleitbar sind, die mittels eines Wähltriebs mit einem als Gleichstrom-Elektromotor ausgebildeten Wählsteller in einer Wählbewegungsrichtung und mittels eines Schalttriebs mit einem als Gleichstrom-Elektromotor ausgebildeten Schaltsteller in einer Schaltbewegungsrichtung verstellbar ist, und deren aktuelle Wähl- und Schaltpositionen im Normalbetrieb mittels einer mit dem Wähltrieb in Wirkverbindung stehenden Wählsensoreinrichtung und mittels einer mit dem Schalttrieb in Wirkverbindung stehenden Schaltsensoreinrichtung ermittelbar sind, wobei bei einem Ausfall einer der Sensoreinrichtungen eine Stellwegposition des betreffenden Stelltriebs ersatzweise durch eine Auswertung mindestens eines elektrischen Kennwertes eines der Elektromotoren ermittelt wird, **dadurch gekennzeichnet, dass** innerhalb eines Wähl- oder Schaltvorgangs der Getriebesteller des von dem Ausfall der Sensoreinrichtung betroffenen Stelltriebs bei einer Stellfunktion zum Anfahren einer Zielposition $x_{Ziel}$ von einer Startposition $x_{Start}$ aus mit den folgenden Schritten gesteuert wird:

- Betätigen des betreffenden Getriebestellers;
- Erfassen der Klemmenspannung U und der Stromaufnahme I des betreffenden Getriebestellers sowie Berechnung der aktuellen Stellwegposition s mit dem Innenwiderstand R des Getriebestellers und einer gerätepezifischen Konstante K mit der Gleichung s = K * ∫ (U - 1 * R) dt und
- weiteres Betätigen des Getriebestellers, wenn eine vorgegebene Zielposition $x_{Ziel}$ des Schalt- oder Wählvorgangs noch nicht erreicht ist
- oder Stoppen des Getriebestellers, wenn eine vorgegebene Zielposition $x_{Ziel}$ des Schalt- oder Wählvorgangs erreicht ist.

18. Verfahren nach zumindest einem der Ansprüche 1 bis 16, **dadurch gekennzeichnet, dass** das Erreichen der Zielposition $x_{Ziel}$ zusätzlich durch einen Vergleich der Betätigungsdauer mit vorbestimmten Betätigungszeiträumen überprüft wird.

**Claims**

1. Method for the emergency control of an automatic transmission, in which selection and shifting processes can be initiated by means of a shifting shaft which is mounted so as to be rotatable about its longitudinal axis and axially displaceable and can be adjusted in a selection movement direction by means of a selector drive with a selector actuator which is embodied as a direct current electric motor, and in a shifting movement direction by means of a shift drive with a shift actuator which is embodied as a direct current electric motor, and the current selection positions and shift positions of which shifting shaft can be determined in the normal operating mode by means of a selector sensor device which is operatively connected to the selector drive and by means of a shift sensor device which is operatively connected to the shift drive, wherein, in the event of a failure of one of the sensor devices, an activating travel position of the respective actuator drive is alternately determined by evaluation of at least one electrical characteristic value of one of the electric motors, **characterized in that**, within a selection process or shifting process, the transmission actuator of the actuator drive which is affected by the failure of the sensor device is controlled during an activating function for approaching a target position $x_{target}$ from a starting position $x_{start}$ with the following steps:

   A) initialization of an activating time measurement;
   B) movement of the actuator drive in the direction of the target position $X_{target}$;
   C) comparison of the measured activating time $t_{meas}$ with a previously determined setpoint activating time $t_{setp}$;
   D) further movement of the actuator drive in the direction of the target position $x_{target}$ as long as the measured activating time $t_{meas}$ is shorter than a predefined lower tolerance threshold ($t_{setp}$ - $\Delta t$) of the setpoint activating time $t_{setp}$ ($t_{meas}$<$t_{setp}$ - $\Delta t$);
   E) braking of the actuator drive and continuation of the selection process or shifting process if the measured activating time $t_{meas}$ is longer than or equal to the lower tolerance threshold ($t_{setp}$ - $\Delta t$) of the setpoint activating time $t_{setp}$ ($t_{meas}$≥$t_{setp}$ - $\Delta t$).

2. Method according to Claim 1, **characterized in that**, during the execution of the activating function,

   F) an activating travel calculation is additionally initialized at the beginning;
   G) the activating travel position s is subsequently calculated from at least one detected electrical characteristic value of the assigned transmission actuator;
   H) after the expiry of the setpoint activating time $t_{setp}$, the calculated activating travel position s is compared with the target position $x_{target}$, and
   I) a fault function is executed if the calculated activating travel position s has not reached the target position $x_{target}$ within a predefined tolerance range $\pm\Delta x$ (s<$x_{target}$ - A, s>$x_{target}$ + $\Delta x$).

3. Method according to Claim 1 or 2, **characterized in that** the activating time measurement and/or the calculation of the activating travel position s is continued after the target position $x_{target}$ has been reached, in order to approach a further target position $x_{target2}$ located in the same activating direction.

4. Method according to one of Claims 1 to 3, **characterized in that**, in order to determine the setpoint activating time $t_{setp}$, the following steps are carried out:

   J) approaching a detectable first reference position $X_{Ref1}$;
   K) initializing an activating travel calculation (s=0) and an activating time measurement ($t_{meas}$=0);
   L) moving the actuator drive in the direction of a second detectable reference position $x_{Ref2}$, and
   M) simultaneously calculating the activating travel position s from at least one detected electrical characteristic value of the assigned transmission actuator;

N) comparing the calculated activating travel position s with predefined activating travel limiting values $x_{Gr/u}$, $x_{Gr/o}$ and comparing the measured activating time $t_{meas}$ with predefined activating time limiting values $t_{Gr/u}$, $t_{Gr/o}$ when the fact that the second reference position $x_{Ref2}$ is reached is detected;

O) storing the measured activating time $t_{meas}$ as a setpoint activating time $t_{setp}$ ($t_{setp} = t_{meas}$) or calculating the setpoint activating time $t_{setp}$ from the measured activating time $t_{meas}$ ($t_{setp}=f(t_{meas})$) if the calculated activating travel position s is within the activating travel limiting values $x_{Gr/u}$, $x_{Gr/o}$ ($x_{Gr/u} \leq s \leq x_{Gr/o}$) and the measured activating time $t_{meas}$ is within the activating time limiting values $t_{Gr/u}$, $t_{Gr/o}$ ($t_{Gr/u} \leq t_{meas} \leq t_{Gr/o}$);

P) executing a fault function if the calculated activating travel position s is outside the activating travel limiting values $x_{Gr/u}$, $x_{Gr/o}$ or the measured activating time $t_{meas}$ is outside the activating time limiting values $t_{Gr/u}$, $t_{Gr/o}$.

5. Method according to one of Claims 1 to 4, **characterized in that**, during the activating function for approaching the target position $x_{target}$, the first reference position $x_{Ref1}$ is used to determine the setpoint activating time $t_{setp}$ as a starting position $X_{start}$.

6. Method according to Claim 5, **characterized in that**, when a synchronized gear speed is engaged by means of the shift actuator, a target position $x_{target}$ which corresponds to the synchronization position of the respective gear speed is approached from the neutral position of the shift drive.

7. Method according to Claims 3 and 6, **characterized in that**, when a synchronized gear speed is engaged, a target position $x_{target2}$ which corresponds to the shift position of the respective gear speed is approached while the time measurement is continued and/or the activating travel calculation of the synchronous position is continued.

8. Method according to Claim 7, **characterized in that**, when the shift position of the gear speed is reached, the current I of the shift actuator is switched off with a ramp function.

9. Method according to one of Claims 1 to 4, **characterized in that**, during the activating function for approaching the target position $x_{target}$, the second reference position $x_{Ref2}$ is used to determine the setpoint activating time $t_{setp}$ as a starting position $x_{start}$.

10. Method according to one of Claims 2 to 9, **characterized in that**, in order to calculate the activating travel position s, the terminal voltage U and the power consumption I of the respective transmission actuator are detected, and **in that** the calculation of the activating travel position s is calculated with the internal resistance R of the transmission actuator and a device-specific constant K according to the equation $s = K*\int(U - I*R)dt$.

11. Method according to Claim 10, **characterized in that** the valid value $R_{new}$ of the internal resistance R, used in the calculation of the activating travel position s, of the transmission actuator is adapted by means of a current value $R_{cur}$, determined before or during the execution of the activating function, of the internal resistance.

12. Method according to one of Claims 2 to 11, **characterized in that** the fault function provides for the current activating function to be aborted and for the starting position $x_{start}$ of the current activating function to be approached again.

13. Method according to one of Claims 2 to 11, **characterized in that** the fault function provides for the current selection process or shifting process to be aborted.

14. Method according to one of Claims 2 to 13, **characterized in that** a fault diagnosis is carried out at the beginning of the fault function, and **in that** the partial functions of the fault function which are to be carried out are determined as a function of the result of the fault diagnosis.

15. Method according to one of Claims 4 to 14, **characterized in that** the fault function provides for the current determination of the setpoint activating time $t_{setp}$ to be aborted, and for the first reference position $x_{Ref1}$, the second reference position $x_{Ref2}$ or a further detectable reference position $x_{Ref3}$ to be approached.

16. Method according to one of Claims 4 to 15, **characterized in that** a fault diagnosis is carried out at the beginning of the fault function, and **in that** the partial functions of the fault function which are to be carried out are determined as a function of the result of the fault diagnosis.

17. Method for the emergency control of an automatic transmission, in which selection and shifting processes can be initiated by means of a shifting shaft which is mounted so as to be rotatable about its longitudinal axis and axially displaceable and can be adjusted in a selection movement direction by means of a selector drive with a selector actuator which is embodied as a direct current electric motor, and in a shifting movement direction by means of a shift drive with a shift actuator which is embodied as a direct current electric motor, and the current selection positions and shift positions of which shifting shaft can be determined in the normal operating mode by means of a selector sensor device which is operatively connected to the selector drive and by means of a shift sensor device which is operatively connected to the shift drive, wherein, in the event of a failure of one of the sensor devices, an activating travel position of the respective actuator drive is alternately determined by evaluation of at least one electrical characteristic value of one of the electric motors, **characterized in that**, within a selection process or shifting process, the transmission actuator of the actuator drive which is affected by the failure of the sensor device is controlled during an activating function for approaching a target position $x_{target}$ from a starting position $x_{start}$ with the following steps:

- activating the respective transmission actuator;
- detecting the terminal voltage U and the power consumption I of the respective transmission actuator and calculating the current activating travel position s with the internal resistance R of the transmission actuator and a device-specific constant K with the equation $s = K*\int(U - I*R)dt$ and
- further activating the transmission actuator if a predefined target position $x_{target}$ of the shifting process or selection process is not yet reached,
- or stopping the transmission actuator if a predefined target position $x_{target}$ of the shifting process or selection process is reached.

18. Method according to at least one of Claims 1 to 16, **characterized in that** the reaching of the target position $x_{target}$ is additionally tested by comparison of the activation period with predetermined activation time periods.


**Revendications**

1. Procédé de commande de secours d'une boîte de vitesses automatisée, selon lequel des opérations de sélection et de changement de rapport peuvent être initiées par le biais d'un arbre de changement de rapport monté de manière à pouvoir tourner autour de son axe longitudinal et coulisser dans le sens axial, lequel peut être positionné dans le sens d'un mouvement de sélection au moyen d'un mécanisme de sélection comprenant un actionneur de sélection réalisé sous la forme d'un moteur électrique à courant continu et dans le sens d'un mouvement de changement de rapport au moyen d'un mécanisme de changement de rapport comprenant un actionneur de changement de rapport réalisé sous la forme d'un moteur électrique à courant continu, et dont les positions de sélection et de changement de rapport actuelles en fonctionnement normal peuvent être déterminées au moyen d'un dispositif de détection de sélection qui est en liaison active avec le mécanisme de sélection et au moyen d'un dispositif de détection de changement de rapport qui est en liaison active avec le mécanisme de changement de rapport, procédé selon lequel, en cas de panne de l'un des dispositifs de détection, une position de la course de positionnement du mécanisme de positionnement concerné est déterminée en guise de remplacement par une interprétation d'au moins une caractéristique électrique de l'un des moteurs électriques, **caractérisé en ce qu'**au sein d'une opération de sélection ou de changement de rapport, l'actionneur d'engrenage du mécanisme de positionnement concerné par la panne du dispositif de détection, lors d'une fonction de positionnement visant à gagner une position destinataire $X_{Ziel}$ à partir d'une position de départ $X_{Start}$, est commandé avec les étapes suivantes :

A) initialisation d'une mesure du temps de positionnement ;
B) déplacement du mécanisme de positionnement en direction de la position destinataire $X_{Ziel}$;
C) comparaison du temps de positionnement mesuré $t_{Mess}$ avec un temps de positionnement de consigne $t_{Soll}$ défini préalablement ;
D) poursuite du déplacement du mécanisme de positionnement en direction de la position destinataire $X_{Ziel}$ tant que le temps de positionnement mesuré $t_{Mess}$ est inférieur à un seuil de tolérance bas ($t_{Soll}$ - $\Delta t$) prédéfini du temps de positionnement de consigne $t_{Soll}$ ($t_{Mess} < t_{Soll}$ - $\Delta t$) ;
E) freinage du mécanisme de positionnement et poursuite de l'opération de sélection ou de changement de rapport lorsque le temps de positionnement mesuré $t_{Mess}$ est supérieur ou égal au seuil de tolérance bas ($t_{Soll}$ - $\Delta t$) du temps de positionnement de consigne $t_{Soll}$ ($t_{Mess} \geq t_{Soll}$ - $\Delta t$).

2. Procédé selon la revendication 1, **caractérisé en ce que** lors de l'exécution de la fonction de positionnement,

F) un calcul de la course de positionnement est en plus initialisé au début ;

G) la position de la course de positionnement s est ensuite calculée à partir d'au moins une caractéristique électrique captée de l'actionneur d'engrenage associé;

H) après écoulement du temps de positionnement de consigne $t_{Soll}$, la position de la course de positionnement s calculée est comparée avec la position destinataire $X_{Ziel}$ et

I) une fonction d'erreur est exécutée lorsque la position de la course de positionnement s calculée n'a pas atteint la position destinataire $X_{Ziel}$ au sein d'une plage de tolérance prédéfinie $\pm\Delta X$ (s $< X_{Ziel} - \Delta X$, s $> X_{Ziel} + \Delta X$).

3. Procédé selon la revendication 1 ou 2, **caractérisé en ce que** la mesure du temps de positionnement et/ou le calcul de la position de la course de positionnement s est poursuivi(e) après avoir atteint la position destinataire $X_{Ziel}$ en vue de gagner une autre position destinataire $X_{Ziel2}$ qui se trouve dans le même sens de positionnement.

4. Procédé selon l'une des revendications 1 à 3, **caractérisé en ce que** les étapes suivantes sont exécutées pour déterminer le temps de positionnement de consigne $t_{Soll}$ :

   J) déplacement jusqu'à une première position de référence $X_{Ref1}$ détectable ;

   K) initialisation d'un calcul de la course de positionnement (s = 0) et d'une mesure du temps de positionnement ($t_{Mess}$ = 0) ;

   L) déplacement du mécanisme de positionnement en direction d'une deuxième position de référence $X_{Ref2}$ détectable et

   M) calcul simultané de la position de la course de positionnement s à partir d'au moins une caractéristique électrique captée de l'actionneur d'engrenage associé;

   N) comparaison de la position de la course de positionnement s calculée avec des valeurs limites de course de positionnement $X_{Gr/u}$, $X_{Gr/o}$ prédéfinies et comparaison du temps de positionnement mesuré $t_{Mess}$ avec des valeurs limites du temps de positionnement prédéfinies $t_{Gr/u}$, $t_{Gr/o}$ lorsqu'il a été détecté que la deuxième position de référence $X_{Ref2}$ a été atteinte;

   0) mise en mémoire du temps de positionnement mesuré $t_{Mess}$ en tant que temps de positionnement de consigne $t_{Soll}$ ($t_{Soll}$ = $t_{Mess}$) ou calcul du temps de positionnement de consigne $t_{Soll}$ à partir du temps de positionnement mesuré $t_{Mess}$ ($t_{Soll}$ = f ($t_{Mess}$)) lorsque la position de la course de positionnement s calculée se trouve à l'intérieur des valeurs limites de course de positionnement $X_{Gr/u}$, $X_{Gr/o}$ ($X_{Gr/u} \leq S \leq X_{Gr/o}$) et le temps de positionnement mesuré $t_{Mess}$ se trouve à l'intérieur des valeurs limites du temps de positionnement $t_{Gr/u}$, $t_{Gr/o}$ ($t_{Gr/u} \leq t_{Mess} \leq t_{Gr/o}$);

   P) Exécution d'une fonction de perturbation lorsque la position de la course de positionnement s calculée se trouve à l'extérieur des valeurs limites de course de positionnement $X_{Gr/u}$, $X_{Gr/o}$ ou le temps de positionnement mesuré $t_{Mess}$ se trouve à l'extérieur des valeurs limites du temps de positionnement $t_{Gr/u}$, $t_{Gr/o}$.

5. Procédé selon l'une des revendications 1 à 4, **caractérisé en ce que** lors de la fonction de positionnement en vue de gagner la position destinataire $X_{Ziel}$, la première position de référence $X_{Ref1}$ est utilisée comme position de départ $X_{Start}$ pour déterminer le temps de positionnement de consigne $t_{Soll}$.

6. Procédé selon la revendication 5, **caractérisé en ce que** lors de l'engagement d'un rapport synchronisé au moyen de l'actionneur de changement de rapport, le déplacement jusqu'à une position destinataire $X_{Ziel}$ correspondant à la position synchrone du rapport concerné s'effectue à partir du point mort de la boîte de vitesses.

7. Procédé selon les revendications 3 et 6, **caractérisé en ce que** lors de l'engagement d'un rapport synchronisé, le déplacement jusqu'à une position destinataire $X_{Ziel2}$ correspondant à la position de changement de rapport du rapport concerné s'effectue en poursuivant la mesure du temps et/ou le calcul de la course de positionnement à partir de la position synchrone.

8. Procédé selon la revendication 7, **caractérisé en ce que** lorsque la position de changement de rapport du rapport est atteinte, le courant I de l'actionneur de changement de rapport est interrompu avec une fonction de rampe.

9. Procédé selon l'une des revendications 1 à 4, **caractérisé en ce que** lors de la fonction de positionnement visant à gagner la position destinataire $X_{Ziel}$, la deuxième position de référence $X_{Ref2}$ est utilisée comme position de départ $X_{Start}$ pour déterminer le temps de positionnement de consigne $t_{Soll}$.

10. Procédé selon l'une des revendications 2 à 9, **caractérisé en ce que** la tension aux bornes U et le courant consommé I de l'actionneur d'engrenage concerné sont captés pour le calcul de la position de course de positionnement s, et **en ce que** le calcul de la position de course de positionnement s est effectué avec la résistance interne R de l'actionneur d'engrenage et une constante K spécifique à l'appareil d'après l'équation $s = K * \int (U - I * R)dt$.

11. Procédé selon la revendication 10, **caractérisé en ce que** la valeur valide $R_{neu}$ de la résistance interne R de l'actionneur d'engrenage utilisée dans le calcul de la position de course de positionnement s est adaptée au moyen d'une valeur actuelle $R_{akt}$ de la résistance interne déterminée avant ou pendant l'exécution de la fonction de positionnement.

12. Procédé selon l'une des revendications 2 à 11, **caractérisé en ce que** la fonction d'erreur prévoit une interruption de la fonction de positionnement actuelle et un nouveau déplacement jusqu'à la position de départ $X_{Start}$ avec la fonction de positionnement actuelle.

13. Procédé selon l'une des revendications 2 à 11, **caractérisé en ce que** la fonction d'erreur prévoit une interruption de l'opération de sélection ou de changement de rapport actuelle.

14. Procédé selon l'une des revendications 2 à 13, **caractérisé en ce qu'**un diagnostic d'erreur est effectué au début de la fonction d'erreur et **en ce que** les fonctions partielles à exécuter de la fonction d'erreur sont définies en fonction du résultat du diagnostic d'erreur.

15. Procédé selon l'une des revendications 4 à 14, **caractérisé en ce que** la fonction de perturbation prévoit une interruption de la détermination actuelle du temps de positionnement de consigne $t_{Soll}$ et le déplacement jusqu'à la première position de référence $X_{Ref1}$, la deuxième position de référence $X_{Ref2}$ ou une autre position de référence $X_{Ref3}$ détectable.

16. Procédé selon l'une des revendications 4 à 15, **caractérisé en ce qu'**un diagnostic de perturbation est effectué au début de la fonction de perturbation et **en ce que** les fonctions partielles à exécuter de la fonction de perturbation sont définies en fonction du résultat du diagnostic de perturbation.

17. Procédé de commande de secours d'une boîte de vitesses automatisée, selon lequel des opérations de sélection et de changement de rapport peuvent être initiées par le biais d'un arbre de changement de rapport monté de manière à pouvoir tourner autour de son axe longitudinal et coulisser dans le sens axial, lequel peut être positionné dans le sens d'un mouvement de sélection au moyen d'un mécanisme de sélection comprenant un actionneur de sélection réalisé sous la forme d'un moteur électrique à courant continu et dans le sens d'un mouvement de changement de rapport au moyen d'un mécanisme de changement de rapport comprenant un actionneur de changement de rapport réalisé sous la forme d'un moteur électrique à courant continu, et dont les positions de sélection et de changement de rapport actuelles en fonctionnement normal peuvent être déterminées au moyen d'un dispositif de détection de sélection qui est en liaison active avec le mécanisme de sélection et au moyen d'un dispositif de détection de changement de rapport qui est en liaison active avec le mécanisme de changement de rapport, procédé selon lequel, en cas de panne de l'un des dispositifs de détection, une position de la course de positionnement du mécanisme de positionnement concerné est déterminée en guise de remplacement par une interprétation d'au moins une caractéristique électrique de l'un des moteurs électriques, **caractérisé en ce qu'**au sein d'une opération de sélection ou de changement de rapport, l'actionneur d'engrenage du mécanisme de positionnement concerné par la panne du dispositif de détection, lors d'une fonction de positionnement visant à gagner une position destinataire $X_{Ziel}$ à partir d'une position de départ $X_{Start}$, est commandé avec les étapes suivantes:

   - actionnement de l'actionneur d'engrenage concerné ;
   - captage de la tension aux bornes U et du courant consommé I de l'actionneur d'engrenage concerné ainsi que calcul de la position de course de positionnement s actuelle avec la résistance interne R de l'actionneur d'engrenage et une constante K spécifique à l'appareil avec l'équation $s = K * \int (U - I * R)dt$ et
   - poursuite de l'actionnement de l'actionneur d'engrenage si une position destinataire $X_{Ziel}$ prédéfinie de l'opération de sélection ou de changement de rapport n'est pas encore atteinte
   - ou arrêt de l'actionneur d'engrenage si une position destinataire $X_{Ziel}$ prédéfinie de l'opération de sélection ou de changement de rapport est atteinte.

18. Procédé selon au moins l'une des revendications 1 à 16, **caractérisé en ce que** l'atteinte de la position destinataire $X_{Ziel}$ est en plus contrôlée par une comparaison de la durée d'actionnement avec des périodes d'actionnement prédéfinies.

$$S1 \quad \boxed{\text{Init. Stellzeitmessung } (t_{Mess}=0)}$$
$$S2 \quad \boxed{\text{Init. Stellwegberechnung } (s=0)}$$

$$S3 \quad \boxed{\text{Schalttrieb in R. Synchronpos.verfahren}}$$

$$S4 \quad \diamond\; t_{Mess} < t_{Soll} - \Delta t \;?$$

$$S5 \quad \boxed{\text{Schalttrieb in R. Schaltpos.verfahren}}$$

$$S6 \quad t_{Mess} < t_{Soll2} - \Delta t \;? \qquad S6' \quad I > I_{Gr/o}?$$

$$S7 \quad \boxed{\text{Schalttrieb abstellen}}$$
$$S8 \quad \boxed{\text{Zeitmessung beenden}}$$
$$S9 \quad \boxed{\text{Stellzeitberechnung beenden}}$$

$$S10 \quad \diamond\; X_{Ziel2} - \Delta X <= S <= X_{Ziel2} + \Delta X \;?$$

$$S11 \quad \boxed{\begin{array}{c}\text{Schaltvorgang}\\ \text{fortsetzen}\end{array}} \qquad S12 \quad \boxed{\begin{array}{c}\text{Fehlerfunktion}\\ \text{ausführen}\end{array}}$$

Fig. 1

**S1** Wähltrieb in R. erster Endanschlag verfahren

**S2** $I > I_{Gr/o}$?

**S3** Init. Stellzeitmessung ($t_{Mess}=0$)

**S4** Init. Stellwegberechnung (s=0)

**S5** Wähltrieb in R. zweiter Endanschlag verfahren

**S6** $I > I_{Gr/o}$?

**S7** $X_{Gr/u} <= S <= X_{Gr/o}$ ?

**S8** Sollstellzeit aus $t_{Mess}$ berechnen

**S10** Störungsfunktion ausführen

**S9** Wählvorgang mit $t_{Soll}$ ausführen

Fig. 2

**EP 2 195 558 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0377848 B1
- DE 19904022 A1
- DE 10143325 A1
- DE 10034736 A1
- DE 10027332